# EUROPEAN PATENT APPLICATION

(11) **EP 4 791 049 A1**
(43) Date of publication of application: **12.08.2026**
(21) Application number: 24881313.1
(22) Date of filing: 19.09.2024
(51) Int. Cl.: H04W 4/40

(54) **COMMUNICATION METHOD, AND APPARATUS**

(30) Priority: 27.10.2023 CN 202311428354
(71) Applicant: HUAWEI TECHNOLOGIES CO., LTD., Shenzhen 518129 (CN)
(72) Inventor: XU, Jiaojiao, Shenzhen, Guangdong 518129 (CN); YI, Feng, Shenzhen, Guangdong 518129 (CN); SU, Hongjia, Shenzhen, Guangdong 518129 (CN)
(74) Representative: Gill Jennings & Every LLP
(86) International application number: PCT/CN2024/119757
(87) International publication number: WO 2025/086947

(57) **Abstract**

This application discloses a communication method and apparatus for use in fields such as V2X, internet of vehicles, and autonomous driving. The method includes: A terminal apparatus determines transmit powers for M pieces of sidelink information to be sent in a first time unit, where types to which the M pieces of sidelink information belong include at least two of: a sidelink synchronization signal block, sidelink data, and sidelink feedback data, and the M pieces of sidelink information are located on P carriers. When a sum of the transmit powers for the M pieces of sidelink information is greater than a maximum transmit power for sidelink information supported by the terminal apparatus, the terminal apparatus determines N pieces of sidelink information from the M pieces of sidelink information, where a sum of transmit powers for the N pieces of sidelink information is less than or equal to the maximum transmit power. The terminal apparatus then sends the N pieces of sidelink information in the first time unit based on the transmit powers for the N pieces of sidelink information. According to the method, the terminal apparatus may perform power control on a plurality of pieces of sidelink information in a same time unit according to its capability limitations, thereby improving sidelink communication efficiency.

## Description

### CROSS-REFERENCE TO RELATED APPLICATIONS

This application claims priority to Chinese Patent Application No. 202311428354.1, filed with the China National Intellectual Property Administration on October 27, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

The 3rd generation partnership project (the 3rd generation partnership project, 3GPP) has defined sidelink (sidelink, SL) communication technology, with typical application scenarios such as internet of vehicles (vehicle-to-everything, V2X). Carrier aggregation (carrier aggregation, CA) is a technology that integrates radio channel resources within or across frequency bands to increase user data transmission rates and reduce latency.

With the introduction of the carrier aggregation technology into sidelink communication, a terminal apparatus can send, within a same slot, different types of sidelink information on a plurality of aggregated carriers (effectively enabling hybrid transmission across carriers). In this case, how to perform power allocation for the sidelink information to perform hybrid transmission requires further research.

### SUMMARY

This application provides a communication method and apparatus to enable sidelink information transmission in a carrier aggregation scenario while considering capability limitations of a terminal apparatus.

**According to a first aspect**, this application provides a communication method. The method is applicable to a scenario such as V2X. The method is performed by a terminal apparatus or a module in a terminal apparatus. Herein, an example in which the terminal apparatus is an execution body is used for description. In the method, the terminal apparatus determines transmit powers for M pieces of sidelink information to be sent in a first time unit, where types to which the M pieces of sidelink information belong include at least two of a sidelink synchronization signal block, sidelink data, and sidelink feedback data, the M pieces of sidelink information are located on P carriers, and M and P are integers greater than 1; when a sum of the transmit powers for the M pieces of sidelink information is greater than a maximum transmit power for sidelink information supported by the terminal apparatus, determines N pieces of sidelink information from the M pieces of sidelink information, where a sum of transmit powers for the N pieces of sidelink information is less than or equal to the maximum transmit power for the sidelink information supported by the terminal apparatus, N is an integer greater than or equal to 1, and M is greater than N; and sends the N pieces of sidelink information in the first time unit based on the transmit powers for the N pieces of sidelink information.

According to the method, the terminal apparatus may perform power control for a plurality of pieces of sidelink information in a same time unit based on a capability limitation of the terminal apparatus (for example, the maximum transmit power for the sidelink information supported by the terminal apparatus), so that a power for sending the sidelink information meets the capability limitation of the terminal apparatus. This helps improve sidelink communication efficiency.

In a possible design, determining the N pieces of sidelink information from the M pieces of sidelink information includes: for a j^{th} carrier among the P carriers, determining Mj2 pieces of sidelink information from Mj1 pieces of sidelink information on the j^{th} carrier, where a sum of transmit powers for the Mj2 pieces of sidelink information is less than or equal to a maximum transmit power for sidelink information supported by the terminal apparatus on the j^{th} carrier, a sum of maximum transmit powers for sidelink information supported by the terminal apparatus on each of the P carriers is less than or equal to the maximum transmit power for the sidelink information supported by the terminal apparatus, j=1, 2, ..., P, Mj1 and Mj2 are integers greater than or equal to 1, and Mj1 is greater than or equal to Mj2; and the N pieces of sidelink information include ${\sum }_{i = 1}^{P} Mj 2$ pieces of sidelink information.

In this way, the terminal apparatus may perform, based on the maximum transmit power for the sidelink information supported by the terminal apparatus on the j^{th} carrier, power control for the sidelink information sent on the j^{th} carrier, to meet a power limit of the terminal apparatus on the j^{th} carrier.

In a possible design, determining the Mj2 pieces of sidelink information from the Mj1 pieces of sidelink information on the j^{th} carrier includes: determining the Mj2 pieces of sidelink information with a higher priority from the Mj1 pieces of sidelink information based on priorities of the Mj1 pieces of sidelink information. This helps meet a transmission requirement of sidelink information with a priority.

In a possible design, the Mj1 pieces of sidelink information include first sidelink information, and a priority of the first sidelink information is determined based on a first priority and/or a second priority of the first sidelink information. The first priority is a priority of a type to which the first sidelink information belongs. The second priority is a priority of the first sidelink information among a plurality of pieces of sidelink information belonging to the type.

In a possible design, a priority of the sidelink synchronization signal block is higher than a priority of the sidelink feedback data, and the priority of the sidelink feedback data is higher than a priority of the sidelink data.

In a possible design, determining the Mj2 pieces of sidelink information from the Mj1 pieces of sidelink information on the j^{th} carrier includes: determining Wj sidelink information groups corresponding to the Mj1 pieces of sidelink information based on transmit powers for the Mj1 pieces of sidelink information, where each sidelink information group includes at least one of the Mj1 pieces of sidelink information, a sum of transmit powers for sidelink information in each sidelink information group is less than or equal to the maximum transmit power for the sidelink information supported by the terminal apparatus on the j^{th} carrier, and Wj is an integer greater than or equal to 1; and determining a first sidelink information group with a largest quantity from the Wj sidelink information groups based on a quantity of pieces of sidelink information in each sidelink information group, where the first sidelink information group includes the Mj2 pieces of sidelink information. This helps send more pieces of sidelink information.

In a possible design, determining the Mj2 pieces of sidelink information from the Mj1 pieces of sidelink information on the j^{th} carrier includes: determining Wj sidelink information groups corresponding to the Mj1 pieces of sidelink information based on transmit powers for the Mj1 pieces of sidelink information, where each sidelink information group includes at least one of the Mj1 pieces of sidelink information, a sum of transmit powers for sidelink information in each sidelink information group is less than or equal to the maximum transmit power for the sidelink information supported by the terminal apparatus on the j^{th} carrier, and Wj is an integer greater than or equal to 1; and determining a second sidelink information group with a largest sum of transmit powers from the Wj sidelink information groups based on the sum of the transmit powers for the sidelink information in each sidelink information group, where the second sidelink information group includes the Mj2 pieces of sidelink information. This helps fully use a capability of the terminal apparatus.

In a possible design, the method further includes: determining Mj3 pieces of sidelink information from (Mj1-Mj2) pieces of sidelink information other than the Mj2 pieces of sidelink information among the Mj1 pieces of sidelink information, where Mj3 is an integer greater than or equal to 1; and sending the Mj3 pieces of sidelink information based on a remaining transmit power of the terminal apparatus on the j^{th} carrier, where the remaining transmit power is equal to a difference between the maximum transmit power for the sidelink information supported by the terminal apparatus on the j^{th} carrier and the sum of the transmit powers for the Mj2 pieces of sidelink information.

In a possible design, determining the N pieces of sidelink information from the M pieces of sidelink information includes: determining the N pieces of sidelink information with a higher priority from the M pieces of sidelink information based on priorities of the M pieces of sidelink information.

In a possible design, the M pieces of sidelink information include first sidelink information, and a priority of the first sidelink information is determined based on a first priority and/or a second priority of the first sidelink information. The first priority is a priority of a type to which the first sidelink information belongs. The second priority is a priority of the first sidelink information within the type.

In a possible design, a priority of the sidelink synchronization signal block is higher than a priority of the sidelink feedback data, and the priority of the sidelink feedback data is higher than a priority of the sidelink data.

In a possible design, determining the N pieces of sidelink information from the M pieces of sidelink information includes: determining W sidelink information groups corresponding to the M pieces of sidelink information based on the transmit powers for the M pieces of sidelink information, where each sidelink information group includes at least one of the M pieces of sidelink information, a sum of transmit powers for sidelink information in each sidelink information group is less than or equal to the maximum transmit power for the sidelink information supported by the terminal apparatus, and W is an integer greater than or equal to 1; and determining a third sidelink information group with a largest quantity from the W sidelink information groups based on a quantity of pieces of sidelink information in each sidelink information group, where the third sidelink information group includes the N pieces of sidelink information.

In a possible design, determining the N pieces of sidelink information from the M pieces of sidelink information includes: determining W sidelink information groups corresponding to the M pieces of sidelink information based on the transmit powers for the M pieces of sidelink information, where each sidelink information group includes at least one of the M pieces of sidelink information, a sum of transmit powers for sidelink information in each sidelink information group is less than or equal to the maximum transmit power for the sidelink information supported by the terminal apparatus, and W is an integer greater than or equal to 1; and determining a fourth sidelink information group with a largest sum of transmit powers from the W sidelink information groups based on the sum of the transmit powers for the sidelink information in each sidelink information group, where the fourth sidelink information group includes the N pieces of sidelink information.

In a possible design, the method further includes: determining K pieces of sidelink information from (M-N) pieces of sidelink information other than the N pieces of sidelink information among the M pieces of sidelink information, where K is an integer greater than or equal to 1; and sending the K pieces of sidelink information based on a remaining transmit power of the terminal apparatus, where the remaining transmit power is equal to a difference between the maximum transmit power for the sidelink information supported by the terminal apparatus and the sum of the transmit powers for the N pieces of sidelink information.

In a possible design, the first time unit includes a slot or at least one symbol in a slot. This is not specifically limited in this application.

In a possible design, the P carriers are located on different frequency bands.

**According to a second aspect**, this application provides a communication apparatus. The communication apparatus implements the function in the first aspect. For example, the communication apparatus includes a corresponding module, unit, or means for performing the operation in the first aspect. The function, unit, or means may be implemented by software, by hardware, or by executing corresponding software by hardware.

In a possible design, the communication apparatus includes a processing unit and a communication unit. The communication unit may be configured to receive and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in the first aspect.

In a possible design, the communication apparatus includes a processor, and the processor may be configured to be coupled to a memory. The memory may store a computer program or instructions necessary for implementing the functions in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and a memory. The memory may store a computer program or instructions necessary for implementing the functions in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and an interface circuit. The processor is configured to: communicate with another apparatus through the interface circuit, and perform the method according to any one of the possible designs or implementations of the first aspect.

It may be understood that in the second aspect, the processor may be implemented by hardware or may be implemented by software. When being implemented by hardware, the processor may be a logic circuit, an integrated circuit, or the like. When being implemented by software, the processor may be a general-purpose processor, and is implemented by reading software code stored in the memory. In addition, there may be one or more processors and there may be one or more memories. The memory may be integrated with the processor, or the memory and the processor are separately disposed. In a specific implementation process, the memory and the processor may be integrated into a same chip, or may be respectively disposed on different chips. A type of the memory and a manner in which the memory and the processor are disposed are not limited in embodiments of this application.

**According to a third aspect**, this application provides a computer-readable storage medium. The computer storage medium stores computer-readable instructions. When a computer reads and executes the computer-readable instructions, the computer is enabled to perform the method according to any one of the possible designs of the first aspect.

For example, the computer-readable storage medium may be any available medium accessible to the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be configured to carry or store desired program code in a form of instructions or a data structure and that is accessible to the computer.

**According to a fourth aspect**, this application provides a computer program product. When a computer reads and executes the computer program product, the computer is enabled to perform the method according to any one of the possible designs of the first aspect.

**According to a fifth aspect**, this application provides a chip (or a chip system). The chip includes a processor, and the processor is coupled to a memory, and is configured to read and execute a software program stored in the memory, to implement the method according to any one of the possible designs of the first aspect.

### BRIEF DESCRIPTION OF DRAWINGS

FIG. 1A, FIG. 1B, and FIG. 1C are diagrams of a communication system according to an embodiment of this application;
FIG. 2A is a diagram of a time domain resource in a resource pool according to an embodiment of this application;
FIG. 2B is a diagram of a frequency domain resource in a resource pool according to an embodiment of this application;
FIG. 3A, FIG. 3B, FIG. 3C, and FIG. 3D are diagrams of several slot structures according to an embodiment of this application;
FIG. 4A is a diagram of a hybrid transmission scenario according to an embodiment of this application;
FIG. 4B is a diagram of another hybrid transmission scenario according to an embodiment of this application;
FIG. 5 is a schematic flowchart corresponding to a communication method according to an embodiment of this application;
FIG. 6 is a possible example block diagram of an apparatus according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

Particularly, the technical solutions in embodiments of this application may be further applied to fields such as vehicle-to-everything (vehicle-to-everything, V2X) communication, cellular vehicle-to-everything (cellular vehicle-to-everything, C-V2X) communication, an internet of vehicles, autonomous driving, and assisted driving. C-V2X is a V2X communication technology developed based on a cellular system, and uses and enhances a current cellular network function and element, to implement low-latency and high-reliability communication between various nodes in a vehicle network, including vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, and vehicle-to-network (vehicle-to-network, V2N) communication. With evolution of the cellular system from 4G LTE to 5G NR, C-V2X evolves from LTE-V2X to NR-V2X.

All aspects, embodiments, or features are presented in this application by describing a system that may include a plurality of devices, components, modules, and the like. It should be appreciated and understood that each system may include another device, component, module, and the like, and/or may not include all devices, components, modules, and the like described with reference to the accompanying drawings. In addition, a combination of these solutions may be used. In addition, in embodiments of this application, terms such as "example" and "for example" are used to give an example, an illustration, or a description. Any embodiment or design solution described as an "example" in this application should not be explained as being more preferred or having more advantages than another embodiment or design solution. Exactly, the term "example" is used to present a concept in a specific manner.

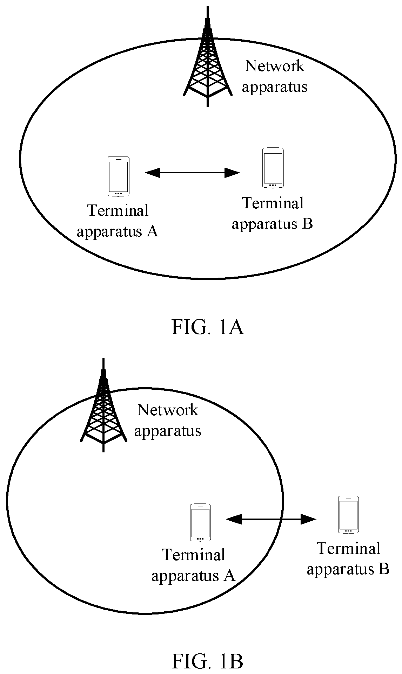

To facilitate understanding of embodiments of this application, communication systems shown in **FIG. 1A to FIG. 1C** are first used as examples to describe in detail a communication system applicable to embodiments of this application. This application is applicable to a communication system that supports sidelink communication, and supports communication scenarios with and without network coverage. A sidelink may also be referred to as a sidelink, and is referred to as a sidelink in this application.

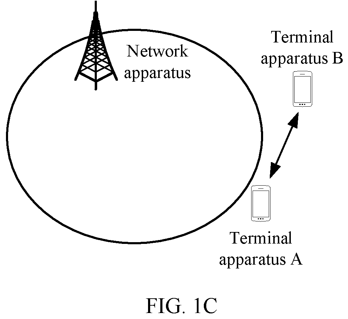

As shown in FIG. 1A to FIG. 1C, the communication system may include a plurality of terminal apparatuses (for example, a terminal apparatus A and a terminal apparatus B), and optionally, further include a network apparatus. In FIG. 1A, both the terminal apparatus A and the terminal apparatus B are in a signal coverage area of the network apparatus. In FIG. 1B, the terminal apparatus A is in the signal coverage area of the network apparatus, but the terminal apparatus B is outside the signal coverage area of the network apparatus. In FIG. 1C, both the terminal apparatus A and the terminal apparatus B are outside the signal coverage area of the network apparatus. The terminal apparatus A and the terminal apparatus B in FIG. 1A and FIG. 1B may communicate with each other through a sidelink and a resource scheduled by the network apparatus. The resource may be a licensed resource or a licensed band. Alternatively, between the terminal apparatus A and the terminal apparatus B, the terminal apparatus may select a resource, that is, select a resource for sidelink communication from a resource pool. The resource is an unlicensed resource or an unlicensed band. Both the terminal apparatus A and the terminal apparatus B in FIG. 1C are outside the signal coverage area of the network apparatus. Therefore, communication can be performed only through a sidelink in a resource selection manner.

The following separately describes the network apparatus and the terminal apparatus in FIG. 1A to FIG. 1C.

### (1) Network apparatus

In embodiments of this application, the network apparatus may also be referred to as a network device, and the network apparatus may be a device in a wireless network. For example, the network apparatus may be a radio access network (radio access network, RAN) node that connects a terminal device to the wireless network, and may also be referred to as an access network device. The network apparatus includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a network apparatus in a 5G mobile communication system, for example, a next generation NodeB (next generation NodeB, gNB), a transmission and reception point (transmission and reception point, TRP), or a TP in an NR system, or one antenna panel or a group of antenna panels (including a plurality of antenna panels) of a base station in a 5G mobile communication system. Alternatively, the network apparatus may be a network node that forms a gNB or a transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling (for example, RRC layer signaling) may be considered as being sent by the DU or sent by the DU and the AAU. It may be understood that the network apparatus may be a device including one or more of a CU node, a DU node, or an AAU node. In addition, the CU may be classified as a network device in a RAN, or the CU may be classified as a network apparatus in a core network (core network, CN). This is not limited in this application.

### (2) Terminal apparatus

The terminal apparatus in embodiments of this application may be a wireless terminal apparatus that can receive scheduling and indication information from the network apparatus. The terminal apparatus may be a terminal device, or may be user equipment (user equipment, UE), a mobile station (mobile station, MS), a mobile terminal (mobile terminal, MT), or the like. The terminal apparatus may be a device that includes a wireless communication function (providing voice/data connectivity to users), for example, a handheld device, a vehicle-mounted device, or a vehicle-mounted module that has a wireless connection function. Currently, some examples of the terminal apparatus are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle-to-everything (vehicle-to-everything, V2X) communication terminal apparatus, an intelligent vehicle, an in-vehicle infotainment system (or referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on-board unit (on-board unit, OBU), a roadside unit (roadside unit, RSU), a T-box, a chip, a system-on-a-chip (system-on-a-chip, SoC), or the like. The chip or the SoC may be mounted in a vehicle, an OBU, an RSU, or a T-box. The wireless terminal in industrial control may be a camera, a robot, or the like. The wireless terminal in the smart home may be a television, an air conditioner, a sweeper, a speaker, a set-top box, or the like. The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range-extended electric vehicle (range-extended EV, REEV), a plug-in hybrid electric vehicle (plug-in HEV, PHEV), a new energy vehicle (new energy vehicle), or a roadside apparatus (roadside unit, RSU). The terminal device may alternatively be a device in device-to-device (device-to-device, D2D) communication, for example, an electricity meter or a water meter. In addition, in embodiments of this application, the terminal device may alternatively be a terminal device in an IoT system. An IoT is an important part of future development of information technology, and is mainly technically characterized in that things are connected to networks by using communication technologies, to implement intelligent networks of human-machine interconnection and interconnection between things.

In this application, predefined content is usually defined in a standard, does not need to be configured by another device, and is information recorded/written in advance in hardware and/or software of the terminal apparatus, or may be understood as information that cannot be changed by the network apparatus or another terminal apparatus. Preconfigured content is usually information recorded/written in advance in the hardware and/or the software of the terminal apparatus, is determined by a factory device manufacturer, and may be changed through software or hardware.

(Pre)configuration may be classified into network apparatus (pre)configuration and terminal apparatus (pre)configuration. In a case of network apparatus (pre)configuration, the (pre)configuration may be performed based on a system information block (system information block, SIB) or RRC signaling. In a case of terminal apparatus (pre)configuration, the (pre)configuration may be performed based on PC5-RRC signaling.

The communication system and the scenario described in embodiments of this application are intended to describe the technical solutions in embodiments of this application more clearly, and do not constitute a limitation on the technical solutions provided in embodiments of this application. A person of ordinary skill in the art may learn that with evolution of a network architecture and emergence of new scenarios, the technical solutions provided in embodiments of this application are also applicable to similar technical problems.

The following first explains and describes related terms in embodiments of this application. Unless otherwise specified, these explanations are intended to support meanings of the related terms and make embodiments of this application easier to understand, and should not be considered as strict limitations on the related terms in the protection scope claimed in this application.

### (1) Sidelink communication

A time-frequency resource for sidelink communication is configured by using a sidelink resource pool, and the sidelink resource pool may also be briefly referred to as a resource pool. The resource pool may be considered as a set of time domain resources and frequency domain resources for sidelink communication. The resource pool may be located on a carrier, or may be located on a bandwidth part (bandwidth part, BWP) of a carrier. For example, one or more resource pools may be configured on one carrier (or a BWP of one carrier).

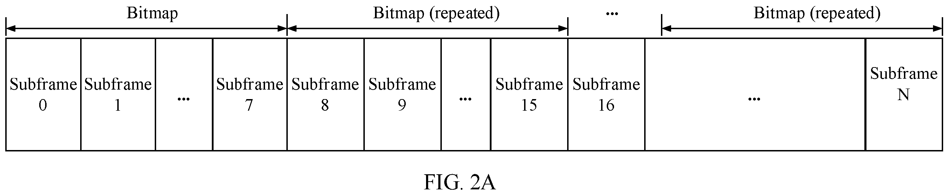

For the time domain resource for sidelink communication, a network apparatus uses a bitmap (bitmap) and periodically repeats the bitmap to indicate all subframes in a system, so as to indicate a time domain resource set of subframes for sidelink communication. As shown in **FIG. 2A**, an example is provided (a length of the bitmap is 8 bits). In each subframe, sidelink transmission occupies a specific quantity of slots (slots), each slot includes M=14 symbols, and the M symbols are one time domain transmission unit. During scheduling of a sidelink communication resource, scheduling may be performed at slot granularity in the time domain.

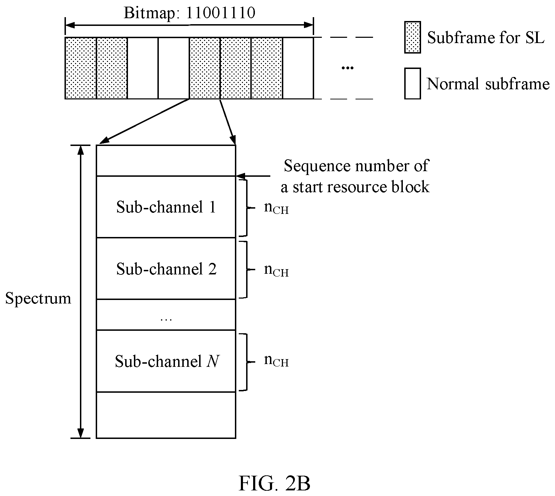

For the frequency domain resource for sidelink communication, the network apparatus divides a band for sidelink communication into several sub-channels, and each sub-channel includes a specific quantity of resource blocks (resource blocks, RBs). As shown in **FIG. 2B**, a diagram of a frequency domain resource in a resource pool is provided. The network apparatus indicates a sequence number of a first resource block of the frequency domain resource for sidelink communication, a total quantity *N* of sub-channels included in the resource pool, and a quantity *n_{CH}* of RBs included in each sub-channel. One or more sub-channels may be occupied at a time for sidelink transmission. During scheduling of a sidelink communication resource, scheduling is performed at sub-channel granularity in the frequency domain.

### (2) Slot structure for a sidelink

In embodiments of this application, information transmitted through the sidelink may be referred to as sidelink information or sidelink information. For example, a type of the sidelink information may include at least one of a sidelink synchronization signal block (synchronization signal block, SSB), sidelink data, and sidelink feedback data.

The sidelink synchronization signal block may include a sidelink primary synchronization signal (sidelink primary synchronization signal, S-PSS), a sidelink secondary synchronization signal (sidelink secondary synchronization signal S-SSS), and sidelink synchronization-related information. The sidelink synchronization-related information is carried on a physical sidelink broadcast channel (physical sidelink broadcast channel, PSBCH). The sidelink data may be carried on a physical sidelink shared channel (physical sidelink shared channel, PSSCH) and/or a physical sidelink control channel (physical sidelink control channel, PSCCH). For example, one piece of sidelink data may refer to one PSSCH and/or PSCCH transmission (a PSSCH/PSCCH transmission). The sidelink feedback data may be carried on a physical sidelink feedback channel (physical sidelink feedback channel, PSFCH). For example, one piece of sidelink feedback data may refer to one PSFCH transmission (a PSFCH transmission).

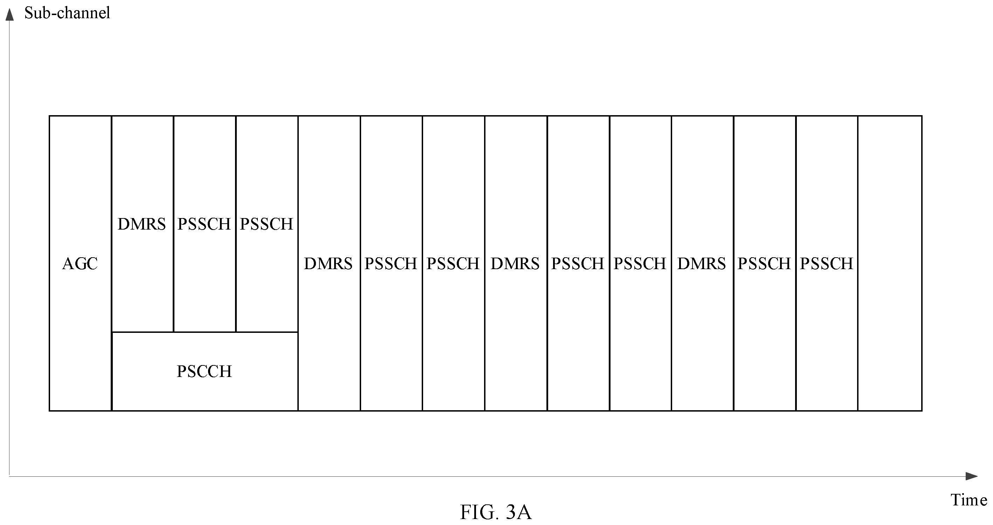

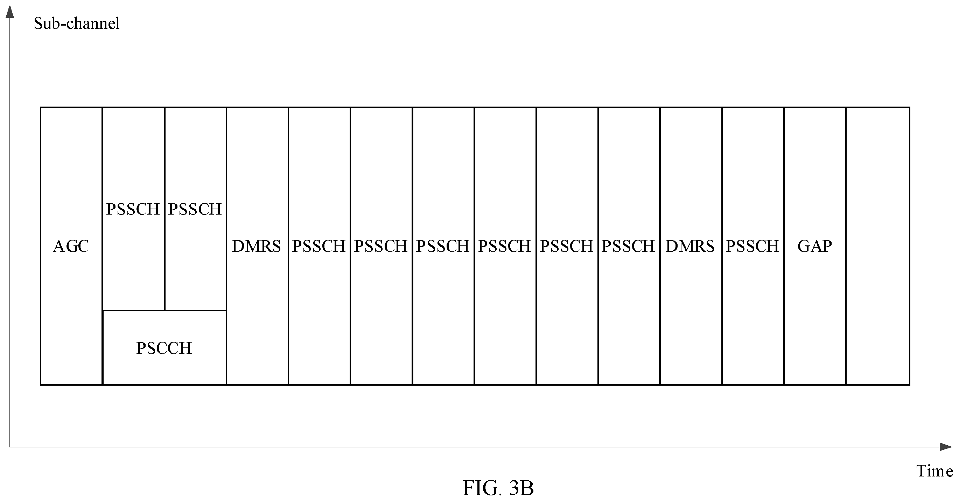

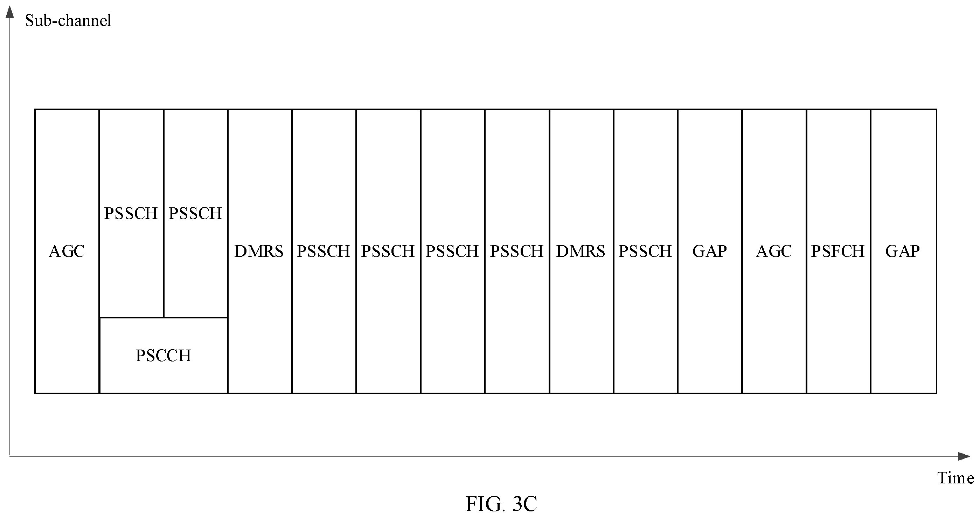

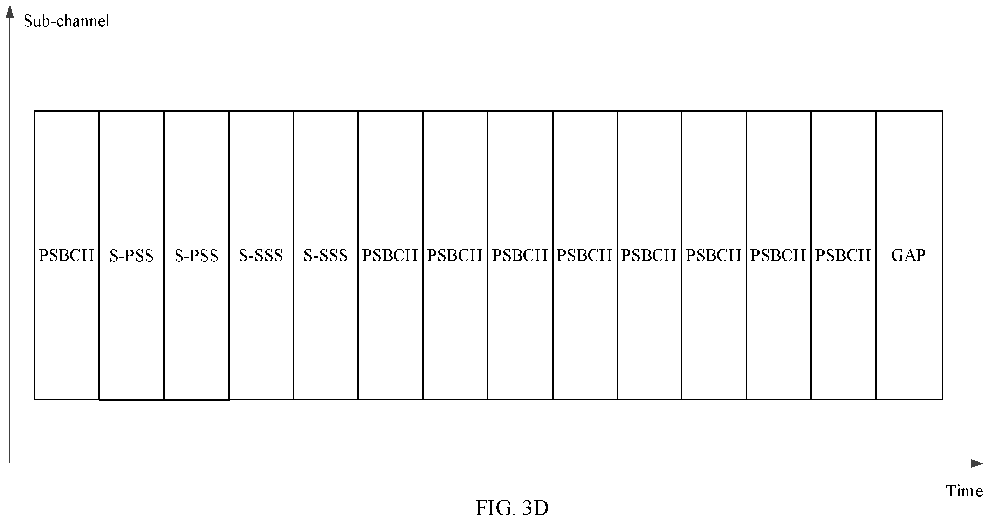

The following describes several possible slot structures for the sidelink with reference to FIG. 3A to FIG. 3D. In FIG. 3A to FIG. 3D, an example in which one slot includes 14 symbols is used for illustration. A first symbol in the slot structures shown in FIG. 3A to FIG. 3C is an automatic gain control (automatic gain control, AGC) symbol, and is used for AGC adjustment. A last symbol in FIG. 3A, FIG. 3C, and FIG. 3D is a guard symbol (guard period, GAP), and is used for antenna switching between sending and receiving. A second-to-last symbol (and a last symbol) in FIG. 3B is a guard symbol.

FIG. 3A is a diagram of a first slot structure. As shown in FIG. 3A, the slot is used to transmit one piece of sidelink data. Specifically, the slot includes three PSCCH symbols and 12 PSSCH symbols. The three PSCCH symbols and three PSSCH symbols in the 12 PSSCH symbols are transmitted in a frequency division manner. The 12 PSSCH symbols include four PSSCH reference signal symbols. The reference signal is, for example, a demodulation reference signal (demodulation reference signal, DMRS).

FIG. 3B is a diagram of a second slot structure. As shown in FIG. 3B, the slot is used to transmit one piece of sidelink data. Specifically, the slot includes two PSCCH symbols and 11 PSSCH symbols. The two PSCCH symbols and two PSSCH symbols in the 11 PSSCH symbols are transmitted in a frequency division manner. The 11 PSSCH symbols include two PSSCH reference signal symbols.

FIG. 3C is a diagram of a third slot structure. As shown in FIG. 3C, the slot is used to transmit one piece of sidelink data and one piece of sidelink feedback data. Specifically, the slot includes one PSFCH symbol, two PSCCH symbols, and nine PSSCH symbols. One guard symbol and one AGC symbol are included between the PSFCH symbol and the PSSCH symbol. The two PSCCH symbols and two PSSCH symbols in the nine PSSCH symbols are transmitted in a frequency division manner. The nine PSSCH symbols include two PSSCH reference signal symbols.

FIG. 3D is a diagram of a fourth slot structure. As shown in FIG. 3D, the slot is used to transmit one sidelink SSB. Specifically, the slot includes nine PSBCH symbols, two S-PSS symbols, and two S-SSS symbols.

Based on the foregoing plurality of slot structures, it may be learned that one slot may be used to transmit one piece of sidelink data, may be used to transmit one piece of sidelink data and one piece of sidelink feedback data, or may be used to transmit one sidelink SSB.

### (3) Power control for a sidelink SSB

When a terminal apparatus needs to send a sidelink SSB in a slot i on an active SL BWP b of a carrier f, the terminal apparatus may determine a power *P*_{S-SSB}(*i*) for the sidelink SSB in the slot i on the active SL BWP b of the carrier f by using the following formula: ${P}_{S - SSB} \left(i\right) = min \left({P}_{CMAX},{P}_{O , S - SSB}+10 {log}_{10}\left({2}^{μ}⋅{M}_{RB}^{S - SSB}\right)+{α}_{S - SSB}⋅PL\right) \left[dBm\right]$

Herein, *P*_{CMAX} is a maximum transmit power for sidelink information supported by the terminal apparatus (for details, refer to a definition in TS38.101-1 8-1). *P*_{O,S-SSB} is a value of dl-P0-PSBCH-r17 (if provided); otherwise, *P*_{S-SSB} (*i*) = *P*_{CMAX}. Herein, *α*_{S-SSB} is a value of *dl-Alpha-PSBCH* (if provided); otherwise, *α*_{S-SSB} = 1. ${M}_{RB}^{S - SSB} = 11$ is a quantity of resource blocks for SSB transmission with a subcarrier spacing configuration µ. When the active SL BWP b is in a serving cell c, *PL = PL_{b,f,c}*(*q_{d}*) (for details, refer to a definition in TS 38.213 7.1.1), with the following exceptions:
- If the terminal apparatus is configured to monitor a PDCCH for a DCI format (format) 0-0 in the serving cell c, a reference signal (reference signal, RS) resource is a resource used by the terminal apparatus to determine a power for PUSCH transmission scheduled by the DCI format 0-0 in the serving cell c.
- If the UE is not configured to monitor the PDCCH for the DCI format 0-0 in the serving cell c, the RS resource corresponds to an SS/PBCH block used by the UE to obtain a MIB.

### (4) Power control for sidelink data

Power control for the sidelink data is described below with reference to a case 1 and a case 2.

### Case 1:

When a terminal device needs to send one piece of sidelink data in a slot i on an active SL BWP b of a carrier f (there is no PSCCH in the slot *i*), the terminal apparatus may determine a power *P*_{PSSCH}(*i*) for a PSSCH in the slot *i* on the active SL BWP b of the carrier f by using the following formula: ${P}_{PSSCH} \left(i\right) = min \left({P}_{CMAX},{P}_{MAX , CBR},min\left({P}_{PSSCH , D}\left(i\right),{P}_{PSSCH , SL}\left(i\right)\right)\right) \left[dBm\right]$

Herein, *P*_{CMAX} is a maximum transmit power for sidelink information supported by the terminal apparatus. *P*_{MAX,CBR} is determined based on a priority of the PSSCH and an sl-MaxTxPower value of a CBR range of a CBR measured in the slot *i.* If sl-MaxTxPower is not provided, *P*_{MAX,CBR} = *P*_{CMAX} . If dl-P0-PSSCH-PSCCH is provided, ${P}_{PSSCH , D} \left(i\right) = {P}_{O , D} + 10 {log}_{10} \left({2}^{μ}⋅{M}_{RB}^{PSSCH}\left(i\right)\right) + {α}_{D} ⋅ {PL}_{D} \left[dBm\right]$ . If dl-P0-PSSCH-PSCCH is not provided, P_{PSSCH,D}(*i*) = min(P_{CMAX},P_{MAX,CBR}) [dBm].

P_{O,D} is a value of dl-P0-PSSCH-PSCCH-r17 (if provided); otherwise, dl-P0-PSSCH-PSCCH-r16 is provided. Herein, α_{D} is a value of dl-Alpha-PSSCH-PSCCH (if provided); otherwise, α_{D} = 1. ${M}_{RB}^{PSSCH} \left(i\right)$ is a quantity of resource blocks for a PSSCH transmission occasion i with an SCS configuration µ. When the active SL BWP b is in a serving cell c, PL_{D} = PL_{b,f,c}(q_{d}), with the following exceptions:
- If the terminal apparatus is configured to monitor a PDCCH for a DCI format (format) 0-0 in the serving cell c, a reference signal resource is a resource used by the terminal apparatus to determine a power for PUSCH transmission scheduled by the DCI format 0-0 in the serving cell c.
- If the UE is not configured to monitor the PDCCH for the DCI format 0-0 in the serving cell c, the RS resource corresponds to an SS/PBCH block used by the UE to obtain a MIB.

### Case 2:

When a terminal device needs to send one piece of sidelink data in a slot *i* on an active SL BWP b of a carrier f (there is a PSCCH in the slot *i*), the terminal apparatus may determine a power *P*_{PSSCH2}(*i*) for a PSSCH in the slot *i* on the active SL BWP b of the carrier f by using the following formula: ${P}_{PSSCH 2} \left(i\right) = 10 {log}_{10} \left(\frac{{M}_{RB}^{PSSCH} \left(i\right) - {M}_{RB}^{PSCCH} \left(i\right)}{{M}_{RB}^{PSSCH} \left(i\right)}\right) + {P}_{PSSCH} \left(i\right) \left[dBm\right]$

Herein, ${M}_{RB}^{PSCCH} \left(i\right)$ is a quantity of resource blocks for PSCCH transmission in the slot *i,* and ${M}_{RB}^{PSSCH} \left(i\right)$ is a quantity of resource blocks for PSCCH transmission in the slot *i.*

The terminal apparatus may determine a power *P*_{PSSCH}(*i*) for PSCCH transmission in the slot *i* on the active SL BWP b of the carrier f by using the following formula: ${P}_{PSCCH} \left(i\right) = 10 {log}_{10} \left(\frac{{M}_{RB}^{PSCCH} \left(i\right)}{{M}_{RB}^{PSSCH} \left(i\right)}\right) + {P}_{PSSCH} \left(i\right) \left[dBm\right]$

Based on the case 1 and the case 2, it can be learned that a power for the sidelink data in the slot *i* on the active SL BWP b of the carrier f is P_{PSSCH}(i), that is, the power for the sidelink data in the slot *i* may be determined based on Formula 2 above.

### (5) Power control for sidelink feedback data

If a terminal apparatus (that is, a receive end of sidelink data) has *N*_{sch,Tx,PSFCH} scheduled PSFCH transmissions (that is, a quantity of pieces of sidelink feedback data) in all resource pools of an active BWP b of a carrier f, and a maximum quantity of pieces of sidelink feedback data that can be simultaneously sent by the terminal apparatus is N_{max,PSFCH}, a quantity of pieces of sidelink feedback data that is determined by the terminal apparatus is N_{Tx,PSFCH}. The following separately describes specific implementations of PSFCH power control when dl-P0-PSFCH is configured and when dl-PO-PSFCH is not configured.

### (5.1) dl-PO-PSFCH is configured

If dl-PO-PSFCH is configured, a power (or referred to as a first power) *P*_{PSFCH,one} for one PSFCH transmission meets the following formula: ${P}_{PSFCH , one} = {P}_{O , PSFCH} + 10 {log}_{10} \left({2}^{μ}\right) + {α}_{PSFCH} ⋅ PL \left[dBm\right]$

Herein, *P*_{O*,*PSFCH} is a transmit power value and is a value configured based on dl-P0-PSFCH-r16 or dl-P0-PSFCH-r17. Herein, *α_{PSFCH}* is a value configured based on dl-Alpha-PSFCH. Otherwise, *α_{PFSCH} = 1. PL = PL_{b,f,c}* is a path loss of the active BWP *b* of the carrier*f* in a serving cell *c*, and is related to the carrier *f*.

**A1**:${N}_{sch , Tx , PSFCH} \leq {N}_{max , PSFCH}$$If {P}_{PSFCH , one} + 10 {log}_{10} \left({N}_{sch , Tx , PSFCH}\right) \leq {P}_{CMAX} ,$ then: ${N}_{Tx , PSFCH} = {N}_{sch , Tx , PSFCH}$ ${P}_{PSFCH , k} \left(i\right) = {P}_{PSFCH , one} \left[dBm\right]$

Herein, *P*_{PSFCH,k}(*i*) represents a transmit power for a k^{th} piece of sidelink feedback data, 1 ≤ *k* ≤ *N*_{Tx,PSFCH}, and *i* is a priority (for example, a priority defined in TS38.213 16.2.4.2) of the k^{th} piece of sidelink feedback data (or indicated in sidelink data corresponding to the k^{th} piece of sidelink feedback data).

Otherwise, the terminal apparatus independently determines the *N*_{Tx,PSFCH} pieces of sidelink feedback data from the *N*_{sch,Tx,PSFCH} pieces of sidelink feedback data. Herein, ${N}_{Tx , PSFCH} \geq max \left(1, {\sum }_{i = 1}^{K} {M}_{i}\right)$, and *K* is defined as a maximum value that meets ${P}_{PSFCH , one} + 10 {log}_{10} \left(max\left(1, {\sum }_{i = 1}^{K} {M}_{i}\right)\right) \leq {P}_{CMAX}$ . Otherwise, *K=0. Mi:* For 1*≤i≤*8*, Mi* is a quantity of PSFCHs with a priority of *i* and having HARQ-ACK information, and for *i>8, Mi* is a quantity of PSFCHs with a priority value of i-8 and having collision information.

In this case, a transmit power *P*_{PSFCH,k}(*i*) for a k^{th} piece of sidelink feedback data in the *N*_{Tx,PSFCH} pieces of sidelink feedback data is as follows: ${P}_{PSFCH , k} \left(i\right) = min \left({P}_{CMAX}-10{log}_{10}\left({N}_{Tx , PSFCH}\right),{P}_{PSFCH , one}\right) \left[dBm\right]$

**In conclusion,** when *N*_{sch,Tx,PSFCH} ≤ *N*_{max,PSFCH} , if *P*_{PSFCH,one} + 10*log*₁₀(*N*_{sch,Tx,PSFCH}) ≤ *P*_{CMAX}, the terminal apparatus may send the *N*_{sch,Tx,PSFCH} pieces of sidelink feedback data, and an actual transmit power for each of the *N*_{sch,Tx,PSFCH} pieces of sidelink feedback data is *P*_{PSFCH,one}; or if *P*_{PSFCH,one} + 10*log*10(*N*_{sch,Tx,PSFCH}) > *P*_{CMAX}, the terminal apparatus determines the *N*_{Tx,PSFCH} pieces of sidelink feedback data from the *N*_{sch,Tx,PSFCH} pieces of sidelink feedback data, and an actual transmit power for each of the *N*_{Tx,PSFCH} pieces of sidelink feedback data is a smallest value in *P*_{CMAX} - 10*log*₁₀(*N*_{Tx,PSFCH}) and *P*_{PSFCH,one}.

**A2**:${N}_{sch , Tx , PSFCH} > {N}_{max , PSFCH}$

The terminal apparatus independently selects the *N*_{max,PSFCH} pieces of sidelink feedback data in ascending order of priorities corresponding to the *N*_{sch,Tx,PSFCH} pieces of sidelink feedback data.$If {P}_{PSFCH , one} + 10 {log}_{10} \left({N}_{max , PSFCH}\right) \leq {P}_{CMAX} ,$ then: ${N}_{Tx , PSFCH} = {N}_{max , PSFCH}$ ${P}_{PSFCH , k} \left(i\right) = {P}_{PSFCH , one} \left[dBm\right]$

Otherwise, the terminal apparatus independently selects the *N*_{Tx,PSFCH} pieces of sidelink feedback data from the *N*_{max,PSFCH} pieces of sidelink feedback data. Herein, ${N}_{Tx , PSFCH} \geq max \left(1, {\sum }_{i = 1}^{K} {M}_{i}\right)$, and *K* is defined as a maximum value that meets ${P}_{PSFCH , one} + 10 {log}_{10} \left(max\left(1, {\sum }_{i = 1}^{K} {M}_{i}\right)\right) \leq {P}_{CMAX}$ . Otherwise, *K=0.*

In this case, a transmit power *P*_{PSFCH,k}(*i*) for a k^{th} piece of sidelink feedback data in the *N*_{Tx,PSFCH} pieces of sidelink feedback data is as follows: ${P}_{PSFCH , k} \left(i\right) = min \left({P}_{CMAX}-10{log}_{10}\left({N}_{Tx , PSFCH}\right),{P}_{PSFCH , one}\right) \left[dBm\right]$

(5.2) dl-PO-PSFCH is not configured

If dl-PO-PSFCH is not configured, a transmit power *P*_{PSFCH,k}(*i*) for a k^{th} piece of sidelink feedback data in the *N*_{Tx,PSFCH} pieces of sidelink feedback data is as follows: ${P}_{PSFCH , k} \left(i\right) = {P}_{CMAX} - 10 {log}_{10} \left({N}_{Tx , PSFCH}\right) \left[dBm\right]$

In addition, for resource pools configured with PSFCH resources that overlap in time, the terminal apparatus expects that dl-P0-PSFCH or dl-Alpha-PSFCH is not provided in any resource pool, or expects that a same dl-P0-PSFCH value and a same dl-Alpha-PSFCH value are provided for all the resource pools.

Carrier aggregation is a technology that integrates radio channel resources within or across frequency bands to increase user data transmission rates and reduce latency. To provide a higher service rate, carrier aggregation is introduced into 3GPP Release 10 to aggregate a plurality of contiguous or non-contiguous component carriers (component carriers, CCs) into higher bandwidth (up to 100 MHz). Based on a frequency band on which an aggregated carrier is located, CA may be classified into intra-band carrier aggregation (intra-band CA) and inter-band carrier aggregation (inter-band CA). Intra-band carrier aggregation means that a plurality of aggregated carriers are located on a same frequency band. Inter-band carrier aggregation may mean that a plurality of aggregated carriers are located on different frequency bands. For example, the plurality of aggregated carriers include a carrier 1, a carrier 2, and a carrier 3. The carrier 1 is located on a frequency band 1, the carrier 2 is located on a frequency band 2, and the carrier 3 is located on a frequency band 3, or the carrier 1 and the carrier 2 are located on a frequency band 1, and the carrier 3 is located on a frequency band 2.

Sidelink communication may support the carrier aggregation technology. For example, a network apparatus may configure one or more resource pools on each of the three carriers, and indicate that the three carriers can be aggregated. Therefore, a terminal apparatus may simultaneously (for example, in a same slot) send a plurality of pieces of sidelink information to one or more other terminal apparatuses on the three carriers. The plurality of pieces of sidelink information may include a plurality of types of sidelink information. That is, after the carrier aggregation technology is introduced, in a same slot, the terminal apparatus may send a plurality of types of sidelink information on a plurality of carriers (that is, simultaneously perform hybrid transmission on a plurality of carriers). However, based on the foregoing descriptions of power control for the sidelink SSB, the sidelink data, and the sidelink feedback data, it can be learned that in a current solution, power control is separately performed for one type of sidelink information on one carrier. However, for a scenario in which the terminal apparatus simultaneously performs hybrid transmission on a plurality of carriers, there is no corresponding power control transmission solution.

Based on this, embodiments of this application conduct research on a related implementation of simultaneously performing hybrid transmission on a plurality of carriers. For example, embodiments of this application provide a communication method, to transmit sidelink information based on a capability limitation of a terminal apparatus in a carrier aggregation scenario.

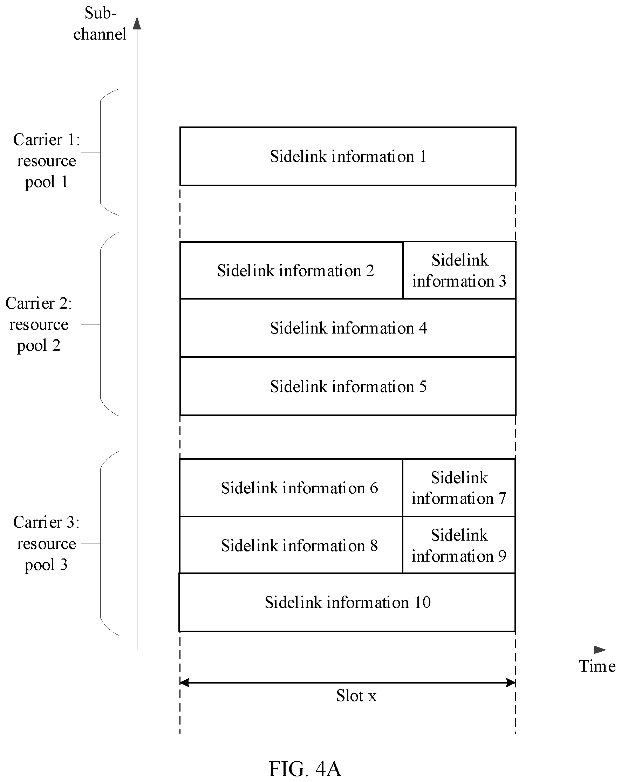

A scenario of simultaneously performing hybrid transmission on a plurality of carriers is described with reference to the following specific example. After a carrier aggregation technology is introduced into sidelink communication, the terminal apparatus may need to send a plurality of pieces of sidelink information in a specific slot, and the plurality of pieces of sidelink information are located in resource pools on different carriers. As shown in FIG. 4A, a network apparatus separately configures a resource pool 1 on a carrier 1, configures a resource pool 2 on a carrier 2, and configures a resource pool 3 on a carrier 3. It is assumed that in a slot x, the terminal apparatus needs to send sidelink information 1 in the resource pool 1 on the carrier 1, send sidelink information 2, sidelink information 3, sidelink information 4, and sidelink information 5 in the resource pool 2 on the carrier 2, and send sidelink information 6, sidelink information 7, sidelink information 8, sidelink information 9, and sidelink information 10 in the resource pool 3 on the carrier 3. A type to which the sidelink information 1 belongs is a sidelink SSB, types to which the sidelink information 2, the sidelink information 4, the sidelink information 5, the sidelink information 6, the sidelink information 8, and the sidelink information 10 belong are sidelink data, and types to which the sidelink information 3, the sidelink information 7, and the sidelink information 9 belong are sidelink feedback data. Further, the terminal apparatus may determine a power for the sidelink SSB (for example, the sidelink information 1) based on the foregoing power control manner (that is, formula 1) of the sidelink SSB, determine a power for each piece of sidelink data (for example, the sidelink information 2, the sidelink information 4, the sidelink information 5, the sidelink information 6, the sidelink information 8, and the sidelink information 10) based on the foregoing power control manner (that is, formula 2) of the sidelink data, and determine a power for each piece of sidelink feedback data (for example, the sidelink information 3, the sidelink information 7, and the sidelink information 9) based on the foregoing power control manner of the sidelink feedback data. However, due to a capability limitation of the terminal apparatus or another reason, the terminal apparatus possibly cannot simultaneously send the 10 pieces of sidelink information. In this case, for how the terminal apparatus sends the sidelink information, some possible solutions are provided in embodiments of this application.

The following describes in detail the solutions provided in embodiments of this application. The solutions provided in embodiments of this application relate to a first terminal apparatus and one or more second terminal apparatuses, and optionally, further relate to a network apparatus. The "first terminal apparatus" may be a terminal apparatus for sending sidelink information, and the "second terminal apparatus" may be a terminal apparatus for receiving sidelink information. Unless otherwise specified, the "terminal apparatus" may be a terminal device, or may be a component in a terminal device, for example, a chip or a chip system; and the "network apparatus" may be a network device, for example, a base station, or may be a component in a network device, for example, a chip or a chip system.

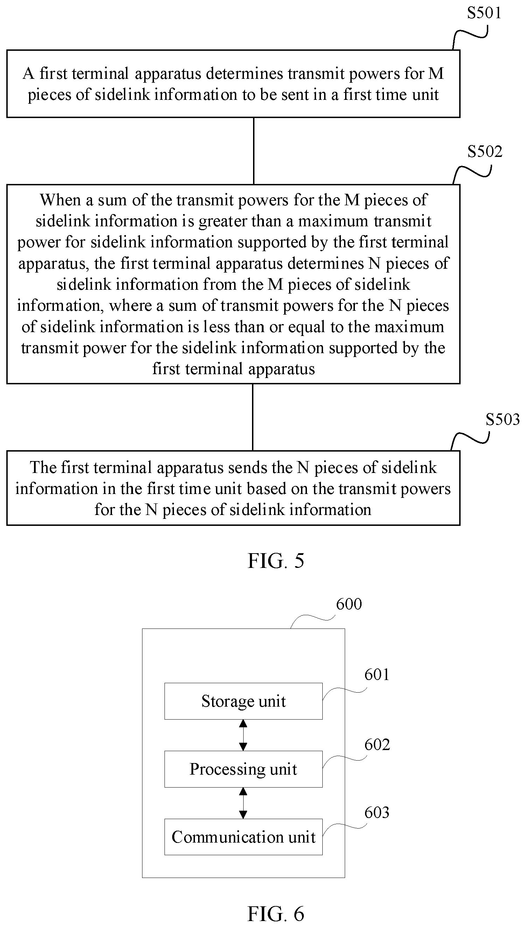

**FIG. 5** is a schematic flowchart corresponding to a communication method according to an embodiment of this application. As shown in FIG. 5, the method includes S501, S502, and S503.

**S501**: A first terminal apparatus determines transmit powers for M pieces of sidelink information to be sent in a first time unit.

For example, the first time unit may be a slot. For example, the first time unit is a slot x shown in FIG. 4A. Alternatively, the first time unit includes at least one symbol (the at least one symbol may be located in a same slot). For example, the first time unit includes first 11 symbols in FIG. 4A, or includes last three symbols in FIG. 4A. In this embodiment of this application, an example in which "the first time unit is a slot" is used for description.

Types to which the M pieces of sidelink information belong include at least two of a sidelink synchronization signal block, sidelink data, and sidelink feedback data. That is, the M pieces of sidelink information include at least two of at least one sidelink synchronization signal block, at least one piece of sidelink data, and at least one piece of sidelink feedback data. Herein, M is an integer greater than 1. For example, the M pieces of sidelink information include sidelink information 1 to sidelink information 10 (that is, M=10) shown in FIG. 4A.

The M pieces of sidelink information are located on P carriers, and P is an integer greater than 1. For example, the M pieces of sidelink information are located in resource pools on the P carriers. If the M pieces of sidelink information include the sidelink information 1 to the sidelink information 10 shown in FIG. 4A, the P carriers include a carrier 1, a carrier 2, and a carrier 3. In this embodiment of this application, that "the sidelink information is located on the carrier/in the resource pool" may mean that the sidelink information is carried on a time-frequency resource in a resource pool corresponding to the carrier, that is, the sidelink information is transmitted on the time-frequency resource in the resource pool corresponding to the carrier. Similarly, the "sidelink information on the carrier" may be sidelink information carried in the resource pool corresponding to the carrier.

It may be understood that in FIG. 4A, an example in which one resource pool is included on one carrier is used for illustration. In another example, two or more resource pools may be included on one carrier. For example, two resource pools are included on the carrier 3: a resource pool a and a resource pool b. Sidelink information 6 to sidelink information 9 are located in the resource pool a, and the sidelink information 10 is located in the resource pool b.

There are a plurality of specific implementations in which the first terminal apparatus determines the transmit powers for the M pieces of sidelink information to be sent in the first time unit. For example, in a first implementation, the first terminal apparatus determines the transmit powers for the M pieces of sidelink information based on the power control manners of the sidelink SSB, the sidelink data, and the sidelink feedback data that are described above.

For another example, in a second implementation, the first terminal apparatus obtains a maximum transmit power *P*_{Cj-MAX} for sidelink information supported by the first terminal apparatus on a j^{th} carrier among the P carriers, where j=1, 2, ..., P. For example, the P carriers include the carrier 1, the carrier 2, and the carrier 3. In this case, the first terminal apparatus may obtain a maximum transmit power *P*_{C1-MAX} for sidelink information supported by the first terminal apparatus on the carrier 1, a maximum transmit power *P*_{C2-MAX} for sidelink information supported by the first terminal apparatus on the carrier 2, and a maximum transmit power *P*_{C3-MAX} for sidelink information supported by the first terminal apparatus on the carrier 3.

Further, the first terminal apparatus determines a transmit power for sidelink information on the j^{th} carrier based on the maximum transmit power for the sidelink information supported by the first terminal apparatus on the j^{th} carrier. For example, the sidelink information 1 on the carrier 1 is a sidelink SSB. In this case, the first terminal apparatus may replace *P*_{CMAX} in Formula 1 with *P*_{C1-MAX} to obtain Formula 1', and determine a transmit power for the sidelink information 1 based on Formula 1'. For another example, sidelink information 2 on the carrier 2 is sidelink data. In this case, the first terminal apparatus may replace *P*_{CMAX} in Formula 2 with *P*_{C2-MAX} to obtain Formula 2', and determine a transmit power for the sidelink information 2 based on Formula 2'. For an implementation of determining other sidelink information, refer to this for processing. Details are not described herein again.

It may be understood that in this embodiment of this application, the maximum transmit power *P*_{Cj-MAX} for the sidelink information supported by the first terminal apparatus on the j^{th} carrier among the P carriers may be predefined or preconfigured, or may be configured by a network apparatus or another directly connected terminal apparatus. This is not specifically limited. Maximum transmit powers for sidelink information supported by the first terminal apparatus on different carriers among the P carriers may be the same or may be different. In addition, a sum of maximum transmit powers for sidelink information supported by the first terminal apparatus on all of the P carriers may be less than or equal to a maximum transmit power for sidelink information supported by the first terminal apparatus, that is, ${P}_{CMAX} \geq {\sum }_{j = 1}^{P} {P}_{Cj - MAX}$, for example, *P*_{Cj-MAX} = *P*_{CMAX}/*P*.

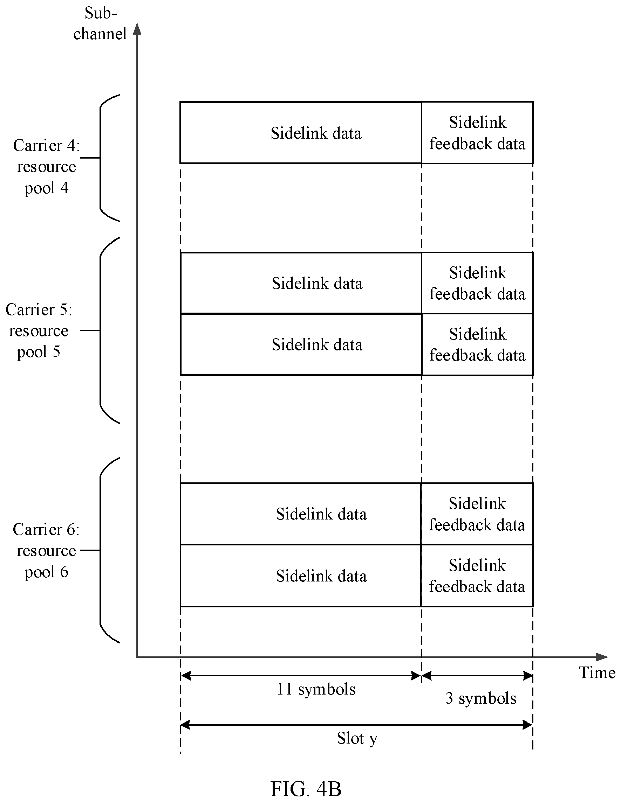

For example, the P carriers may be located on different frequency bands. For example, the P carriers are respectively located on P different frequency bands. It may be understood that because a plurality of carriers aggregated on a same frequency band usually correspond to a same radio frequency channel, that is, the plurality of carriers aggregated on the same frequency band may be considered as "one carrier" in terms of a power control implementation, power control may be performed by using the conventional technology. Therefore, in this embodiment of this application, a scenario in which "the P carriers are respectively located on the P different frequency bands" is mainly used as an example for description. In addition, considering that AGC is separately performed when the sidelink data and the sidelink feedback data are located in a same slot, for a case shown in FIG. 4B (that is, a slot y on each carrier includes sidelink data and sidelink feedback data), the first terminal apparatus may perform power control by using the method described in this embodiment of this application, or the first terminal apparatus may separately perform power control for sidelink data on first 11 symbols in the slot y, and separately perform power control for sidelink feedback data on last three symbols in the slot y.

**S502**: When a sum of the transmit powers for the M pieces of sidelink information is greater than the maximum transmit power for the sidelink information supported by the first terminal apparatus, the first terminal apparatus determines N pieces of sidelink information from the M pieces of sidelink information, where a sum of transmit powers for the N pieces of sidelink information is less than or equal to the maximum transmit power for the sidelink information supported by the first terminal apparatus, N is an integer greater than or equal to 1, and M is greater than N.

For example, after determining the transmit powers for the M pieces of sidelink information, the terminal apparatus may determine whether the sum of the transmit powers for the M pieces of sidelink information is greater than the maximum transmit power for the sidelink information supported by the first terminal apparatus. If the sum of the transmit powers for the M pieces of sidelink information is greater than the maximum transmit power for the sidelink information supported by the first terminal apparatus, the terminal apparatus may determine the N pieces of sidelink information from the M pieces of sidelink information. If the sum of the transmit powers for the M pieces of sidelink information is less than or equal to the maximum transmit power for the sidelink information supported by the first terminal apparatus, the terminal apparatus may directly send the M pieces of sidelink information based on the transmit powers for the M pieces of sidelink information that are determined in S501.

The following describes some possible implementations of "determining the N pieces of sidelink information from the M pieces of sidelink information" with reference to Implementation 1 and Implementation 2. "Determining" in "determining the N pieces of sidelink information from the M pieces of sidelink information" may be replaced with "selecting". For other similar parts, refer to this.

### Implementation 1

In Implementation 1, the terminal apparatus may separately select at least one piece of sidelink information from a plurality of pieces of sidelink information on each of the P carriers by using a carrier as a granularity/unit. In this case, the transmit powers for the M pieces of sidelink information may be determined by the terminal apparatus by using the second implementation.

Specifically, for the j^{th} carrier among the P carriers, the terminal apparatus may determine Mj2 pieces of sidelink information from Mj1 pieces of sidelink information on the j^{th} carrier. A sum of transmit powers for the Mj2 pieces of sidelink information is less than or equal to the maximum transmit power for the sidelink information supported by the first terminal apparatus on the j^{th} carrier. The sum of the maximum transmit powers for the sidelink information supported by the first terminal apparatus on each of the P carriers is less than or equal to the maximum transmit power for the sidelink information supported by the first terminal apparatus. Mj1 and Mj2 are integers greater than or equal to 1, and Mj1 is greater than or equal to Mj2. Therefore, the N pieces of sidelink information include ${\sum }_{j = 1}^{P} Mj 2$ pieces of sidelink information.

For example, as shown in FIG. 4A, the P carriers include the carrier 1, the carrier 2, and the carrier 3. The carrier 1 is a first (j=1) carrier among the P carriers. Because there is only the sidelink information 1 on the carrier 1, M12 pieces of sidelink information determined from M11 pieces of sidelink information on the carrier 1 may include the sidelink information 1. The carrier 2 is a second (j=2) carrier among the P carriers. Because the sidelink information 2 to sidelink information 5 are included on the carrier 2, M22 pieces of sidelink information determined from M21 pieces of sidelink information on the carrier 2 may include at least one of the sidelink information 2 to the sidelink information 5. The carrier 3 is a third (j=3) carrier among the P carriers. Because the sidelink information 6 to the sidelink information 10 are included on the carrier 3, M32 pieces of sidelink information determined from M31 pieces of sidelink information on the carrier 3 may include at least one of the sidelink information 6 to the sidelink information 10. In this way, the N pieces of sidelink information may be obtained, including the M12 pieces of sidelink information, the M22 pieces of sidelink information, and the M32 pieces of sidelink information.

For example, the first terminal apparatus may determine the Mj2 pieces of sidelink information from the Mj1 pieces of sidelink information based on a plurality of possible parameters. For example, the first terminal apparatus may determine the Mj2 pieces of sidelink information from the Mj1 pieces of sidelink information based on at least one of the following ① to ③: ① priorities of the Mj1 pieces of sidelink information; ② quantities of pieces of sidelink information in sidelink information groups corresponding to the Mj1 pieces of sidelink information (for descriptions of the sidelink information group, refer to the following); and ③ sums of transmit powers for the sidelink information in the sidelink information groups corresponding to the Mj1 pieces of sidelink information.

The following describes, with reference to Example 1 to Example 3, several examples of determining the Mj2 pieces of sidelink information from the Mj1 pieces of sidelink information by the first terminal apparatus.

### Example 1

The first terminal apparatus determines the Mj2 pieces of sidelink information with a higher priority from the Mj1 pieces of sidelink information based on the priorities of the Mj1 pieces of sidelink information. This helps meet a transmission requirement of sidelink information with a high priority. For example, first sidelink information among the Mj1 pieces of sidelink information is used as an example, and a priority of the first sidelink information is determined based on a first priority and/or a second priority.

The first priority is a priority of a type to which the first sidelink information belongs. For example, priorities of different types may be as follows: A priority of a type 1 is higher than a priority of a type 2, and the priority of the type 2 is higher than a priority of a type 3. The type 1 is the sidelink SSB, the type 2 is the sidelink feedback data, and the type 3 is the sidelink data. That is, a priority of the sidelink SSB is higher than a priority of the sidelink feedback data, and the priority of the sidelink feedback data is higher than a priority of the sidelink data. It may be understood that "the priority of the sidelink SSB (or the sidelink feedback data or the sidelink data)" in this embodiment of this application is a priority of a sidelink SSB type. For example, if the type to which the first sidelink information belongs is the sidelink SSB, the first priority of the first sidelink information is the priority of the sidelink SSB type.

The second priority is a priority of the first sidelink information among a plurality of pieces of sidelink information belonging to the same type as the first sidelink information. If the type to which the first sidelink information belongs is the sidelink data, the first sidelink information may include priority information, and a priority indicated in the priority information is the second priority of the first sidelink information. If the type to which the first sidelink information belongs is the sidelink feedback data, sidelink data corresponding to the first sidelink information may include priority information, and a priority indicated in the priority information is the second priority of the first sidelink information. If the type to which the first sidelink information belongs is the sidelink SSB, additional priority information may be provided by using different S-PSS or S-SSS combinations mapped to each symbol pair, and a priority indicated in the additional priority information is the second priority of the first sidelink information.

For example, the j^{th} (j=3) carrier among the P carriers is the carrier 3, the M31 pieces of sidelink information on the carrier 3 include the sidelink information 6 to the sidelink information 10, types to which the sidelink information 6, sidelink information 8, and the sidelink information 10 belong are the sidelink data, and types to which sidelink information 7 and the sidelink information 9 belong are the sidelink feedback data. For example, "the priority of the sidelink information is determined based on the first priority and/or the second priority". Because a priority of a sidelink feedback data type is higher than a priority of a sidelink data type, first priorities of the sidelink information 7 and the sidelink information 9 are higher than first priorities of the sidelink information 6, the sidelink information 8, and the sidelink information 10. Further, for the sidelink information 7 and the sidelink information 9 belonging to a same type, it is assumed that a second priority of the sidelink information 7 is higher than a second priority of the sidelink information 9; and for the sidelink information 6, the sidelink information 8, and the sidelink information 10 belonging to a same type, it is assumed that a second priority of the sidelink information 6 is higher than a second priority of the sidelink information 8, and the second priority of the sidelink information 8 is higher than a second priority of the sidelink information 10. In this case, priorities of the sidelink information 6 to the sidelink information 10 are sorted in descending order as follows: the sidelink information 7, the sidelink information 9, the sidelink information 6, the sidelink information 8, and the sidelink information 10.

It is assumed that transmit powers for the sidelink information 6 to the sidelink information 10 are shown in Table 1, and the maximum transmit power for the sidelink information supported by the first terminal apparatus on the carrier 3 is 100 milliwatts (mW).

**Table 1 Examples of the transmit powers for the sidelink information 6 to the sidelink information 10**

| Sidelink information | Transmit power (in milliwatts) |
|---|---|
| Sidelink information 6 | 40 |
| Sidelink information 7 | 30 |
| Sidelink information 8 | 30 |
| Sidelink information 9 | 40 |
| Sidelink information 10 | 20 |

In this case, the first terminal apparatus may first select sidelink information (namely, the sidelink information 7) with a highest priority based on the priorities of the sidelink information 6 to the sidelink information 10. Because the transmit power for the sidelink information 7 is 30 mW, and less than 100 mW, the first terminal apparatus may select sidelink information (namely, the sidelink information 9) with a highest priority from remaining sidelink information (the sidelink information 6 and the sidelink information 8 to the sidelink information 10). Because a sum of the transmit powers for the sidelink information 7 and the sidelink information 9 is 30+40=70 mW, and less than 100 mW, the first terminal apparatus may continue to select sidelink information (namely, the sidelink information 6) with a highest priority from remaining sidelink information (the sidelink information 6, the sidelink information 8, and the sidelink information 10). Because a sum of the transmit powers for the sidelink information 7, the sidelink information 9, and the sidelink information 6 is 30+40+40=110 mW, and greater than 100 mW, the first terminal apparatus may stop selection. In this case, the M32 pieces of sidelink information determined by the first terminal apparatus include the sidelink information 7 and the sidelink information 9.

It may be understood that: **(1)** In the foregoing example, descriptions are provided by using an example in which the priorities of the sidelink information 6 to the sidelink information 10 are different. In another example, priorities of different sidelink information may be the same. For example, if the sidelink information 6 and the sidelink information 8 have a same priority, when the first terminal apparatus needs to select sidelink information with a highest priority from remaining sidelink information (the sidelink information 6, the sidelink information 8, and the sidelink information 10), the first terminal apparatus may select the sidelink information 6 and the sidelink information 8. Because a sum of the transmit powers for the sidelink information 7, the sidelink information 9, and the sidelink information 6 is 30+40+40=110 mW, and greater than 100 mW, and a sum of the transmit powers for the sidelink information 7, the sidelink information 9, and the sidelink information 8 is 30+40+30=100 mW, the first terminal apparatus may stop selection. In this case, the M32 pieces of sidelink information determined by the first terminal apparatus include the sidelink information 7, the sidelink information 9, and the sidelink information 8.

**(2)** In another implementation, for the foregoing example, after determining that the sum of the transmit powers for the sidelink information 7, the sidelink information 9, and the sidelink information 6 is 30+40+40=110 mW, the first terminal apparatus may continue to perform selection (that is, not stop selection), so that a remaining transmit power of the first terminal apparatus on the carrier 3 is as low as possible, to help fully use a capability of the first terminal apparatus.

For example, the first terminal apparatus may continue to select sidelink information with a highest priority (namely, the sidelink information 8) from remaining sidelink information (the sidelink information 8 and the sidelink information 10). Because a sum of the transmit powers for the sidelink information 7, the sidelink information 9, and the sidelink information 8 is 30+40+30=100 mW, the first terminal apparatus may stop selection. In this case, the M32 pieces of sidelink information determined by the first terminal apparatus include the sidelink information 7, the sidelink information 9, and the sidelink information 8 (the remaining transmit power of the first terminal apparatus on the carrier 3 is 0).

For another example, remaining sidelink information includes the sidelink information 8 and the sidelink information 10. The first terminal apparatus may separately calculate a sum of the transmit powers for the sidelink information 7, the sidelink information 9, and the sidelink information 8 and a sum of the transmit powers for the sidelink information 7, the sidelink information 9, and the sidelink information 10. A sum of transmit powers for a combination of {sidelink information 7, sidelink information 9, sidelink information 8} is 30+40+30=100 mW, and correspondingly, the remaining transmit power of the first terminal apparatus on the carrier 3 is 0. A sum of transmit powers for a combination of {sidelink information 7, sidelink information 9, sidelink information 10} is 30+40+20=90 mW, and correspondingly, the remaining transmit power of the first terminal apparatus on the carrier 3 is 10 mW (that is, 100 mW-90 mW). Therefore, the M32 pieces of sidelink information determined by the first terminal apparatus include the sidelink information 7, the sidelink information 9, and the sidelink information 8 (that is, a combination with a lower remaining transmit power).

### Example 2

The first terminal apparatus determines Wj sidelink information groups corresponding to the Mj1 pieces of sidelink information based on transmit powers for the Mj1 pieces of sidelink information. Each sidelink information group includes at least one of the Mj1 pieces of sidelink information. A sum of transmit powers for sidelink information in each sidelink information group is less than or equal to the maximum transmit power for the sidelink information supported by the first terminal apparatus on the j^{th} carrier. Wj is an integer greater than or equal to 1. Further, the first terminal apparatus determines a first sidelink information group with a largest quantity (that is, a quantity of pieces of sidelink information in the first sidelink information group is largest) from the Wj sidelink information groups based on a quantity of pieces of sidelink information in each sidelink information group. The first sidelink information group includes the Mj2 pieces of sidelink information. This helps send more pieces of sidelink information.

For example, the j^{th} (j=3) carrier among the P carriers is the carrier 3, and the M31 pieces of sidelink information on the carrier 3 include the sidelink information 6 to the sidelink information 10. For transmit powers for the sidelink information 6 to the sidelink information 10, refer to Table 1. In this case, the Wj sidelink information groups may include a sidelink information group 1 {sidelink information 7, sidelink information 9, sidelink information 8}, a sidelink information group 2 {sidelink information 6, sidelink information 9, sidelink information 10}, a sidelink information group 3 {sidelink information 7, sidelink information 9, sidelink information 10}, and a sidelink information group 4 {sidelink information 6, sidelink information 9}. Herein, an example in which the Wj sidelink information groups include the sidelink information group 1 to the sidelink information group 4 is used for description. The Wj sidelink information groups may further include another sidelink information group. This is not limited in this embodiment of this application.

Because a quantity of pieces of sidelink information in each of the sidelink information group 1, the sidelink information group 2, and the sidelink information group 3 is 3, and a quantity of pieces of sidelink information in the sidelink information group 4 is 2, the first sidelink information group determined by the first terminal apparatus may be one of the sidelink information group 1, the sidelink information group 2, and the sidelink information group 3. For example, if the first sidelink information group determined by the first terminal apparatus is the sidelink information group 1, the M32 pieces of sidelink information include the sidelink information 7, the sidelink information 9, and the sidelink information 8.

It may be understood that in the foregoing example, quantities of pieces of sidelink information in the sidelink information group 1, the sidelink information group 2, and the sidelink information group 3 are the same. Therefore, the first terminal apparatus may randomly select one sidelink information group from the three sidelink information groups as the first sidelink information group, or may select one sidelink information group from the three sidelink information groups as the first sidelink information group based on another possible parameter.

For example, the first terminal apparatus may perform selection based on priorities of the sidelink information in the three sidelink information groups. Specifically, in the case 1, when quantities of pieces of sidelink information with a highest priority in different sidelink information groups are different, the first terminal apparatus may select a sidelink information group with a largest quantity of pieces of sidelink information with a highest priority from the three sidelink information groups. For example, if a quantity of pieces of sidelink information with a highest priority in the sidelink information group 1 is 3, a quantity of pieces of sidelink information with a highest priority in the sidelink information group 2 is 2, and a quantity of pieces of sidelink information with a highest priority in the sidelink information group 3 is 1, the sidelink information group selected by the first terminal apparatus may be the sidelink information group 1. In the case 2, when quantities of pieces of sidelink information with a highest priority in different sidelink information groups are the same, the first terminal apparatus may perform selection based on priorities of sidelink information with a second highest priority in the three sidelink information groups. For example, if a quantity of pieces of sidelink information with a highest priority in each of the sidelink information group 1, the sidelink information group 2, and the sidelink information group 3 is 1, and a priority of sidelink feedback data with a second highest priority in the sidelink information group 1 is higher than a priority of sidelink information with a second highest priority in another sidelink information group (the sidelink information group 2 or the sidelink information group 3), the sidelink information group selected by the first terminal apparatus may be the sidelink information group 1. Two possible implementations are described in the case 1 and the case 2. In a specific implementation, the sidelink information group may be selected based on the manners in the case 1 and the case 2. For example, if a priority order of the sidelink information 6 to the sidelink information 10 is the order described in Example 1, the sidelink information group selected by the first terminal apparatus may be the sidelink information group 1.

For another example, the first terminal apparatus may perform selection based on remaining transmit powers (namely, remaining transmit powers of the first terminal apparatus on the carrier 3) corresponding to the three sidelink information groups. Because the remaining transmit power corresponding to the sidelink information group 1 is 0, the remaining transmit power corresponding to the sidelink information group 2 is 0, and the remaining transmit power corresponding to the sidelink information group 3 is 10 mW, the first terminal apparatus may select a sidelink information group corresponding to a lowest remaining transmit power, for example, the sidelink information group 1 or the sidelink information group 2. Optionally, because the remaining transmit powers corresponding to the sidelink information group 1 and the sidelink information group 2 are the same, the first terminal apparatus may further select one sidelink information group based on priorities of sidelink information in the two sidelink information groups. For details, refer to the foregoing description. Details are not described again.

The "quantity of pieces of sidelink information in the sidelink information group" may be replaced with a "quantity of second terminal apparatuses corresponding to the sidelink information group", so that more second terminal apparatuses can be served. The second terminal apparatus is a terminal apparatus configured to receive sidelink information sent by the first terminal apparatus. For example, if terminal apparatuses receiving the sidelink information 6 and the sidelink information 7 are a terminal apparatus a, terminal apparatuses receiving the sidelink information 8 and the sidelink information 9 are a terminal apparatus b, and a terminal apparatus receiving the sidelink information 10 is a terminal apparatus c, a quantity of second terminal apparatuses corresponding to the sidelink information group 1 is 2, and a quantity of second terminal apparatuses corresponding to the sidelink information group 2 is 3. Details are not listed one by one herein.

In addition, a possible variation of Example 2 is as follows: The first terminal apparatus determines the Mj2 pieces of sidelink information with a lower transmit power from the Mj1 pieces of sidelink information based on transmit powers for the Mj1 pieces of sidelink information. A specific implementation is similar to the implementation in which "the first terminal apparatus determines the Mj2 pieces of sidelink information with a higher priority from the Mj1 pieces of sidelink information based on the priorities of the Mj1 pieces of sidelink information". Details are not described again.

### Example 3

The first terminal apparatus determines Wj sidelink information groups corresponding to the Mj1 pieces of sidelink information based on transmit powers for the Mj1 pieces of sidelink information. For the Wj sidelink information groups, refer to the descriptions in Example 2. Further, the first terminal apparatus determines a second sidelink information group with a largest sum of transmit powers (that is, a sum of transmit powers for sidelink information in the second sidelink information group) from the Wj sidelink information groups based on a sum of transmit powers for sidelink information in each sidelink information group. The second sidelink information group includes the Mj2 pieces of sidelink information. This helps fully send a capability of the first terminal apparatus. "The largest sum of transmit powers" may be replaced with "a lowest remaining transmit power of the first terminal apparatus on the j^{th} carrier".

For example, the j^{th} (j=3) carrier among the P carriers is the carrier 3, and the M31 pieces of sidelink information on the carrier 3 include the sidelink information 6 to the sidelink information 10. For transmit powers for the sidelink information 6 to the sidelink information 10, refer to Table 1. For example, the Wj sidelink information groups may include a sidelink information group 1 {sidelink information 7, sidelink information 9, sidelink information 8}, a sidelink information group 2 {sidelink information 6, sidelink information 9, sidelink information 10}, a sidelink information group 3 {sidelink information 7, sidelink information 9, sidelink information 10}, and a sidelink information group 4 {sidelink information 6, sidelink information 9}. Because a sum of transmit powers for sidelink information in the sidelink information group 1 is 100 mW, a sum of transmit powers for sidelink information in the sidelink information group 2 is 100 mW, a sum of transmit powers for sidelink information in the sidelink information group 3 is 90 mW, and a sum of transmit powers for sidelink information in the sidelink information group 4 is 80 mW, the second sidelink information group selected by the first terminal apparatus is the sidelink information group 1 or the sidelink information group 3.

It may be understood that in the foregoing example, the sum of the transmit powers for the sidelink information in the sidelink information group 1 is the same as the sum of the transmit powers for the sidelink information in the sidelink information group 2. Therefore, the first terminal apparatus may randomly select one sidelink information group from the two sidelink information groups as the second sidelink information group, or may select one sidelink information group from the two sidelink information groups as the second sidelink information group based on another possible parameter. For example, the first terminal apparatus may perform selection based on priorities of the sidelink information in the two sidelink information groups. For a specific implementation, refer to Example 1 or Example 2. For another example, the first terminal apparatus may perform selection based on quantities of pieces of sidelink information in the two sidelink information groups. For a specific implementation, refer to Example 2.

Some implementations of determining the Mj2 pieces of sidelink information based on different parameters are respectively described in Example 1 to Example 3. In another possible example, the Mj2 pieces of sidelink information may be determined based on any one or more of or a combination of some principles in a plurality of items in ① to ③. For a specific determining principle, refer to Example 1 to Example 3.

### Implementation 2

In Implementation 2, the first terminal apparatus may determine the N pieces of sidelink information from the M pieces of sidelink information based on a plurality of possible parameters. For example, the first terminal apparatus may determine the N pieces of sidelink information from the M pieces of sidelink information based on at least one of the following ④ to ⑥: ④ priorities of the M pieces of sidelink information; ⑤ quantities of pieces of sidelink information in sidelink information groups corresponding to the M pieces of sidelink information (for descriptions of the sidelink information group, refer to the following); and ⑥ sums of transmit powers for the sidelink information in the sidelink information groups corresponding to the M pieces of sidelink information. In this case, the transmit powers for the M pieces of sidelink information may be determined by the terminal apparatus by using the first implementation.

The following describes, with reference to Example 4 to Example 6, several examples of determining the N pieces of sidelink information from the M pieces of sidelink information by the first terminal apparatus.

### Example 4

The first terminal apparatus determines the N pieces of sidelink information with a higher priority from the M pieces of sidelink information based on the priorities of the M pieces of sidelink information. This helps meet a transmission requirement of sidelink information with a high priority. For a specific implementation, refer to the descriptions in Example 1. Details are not described again.

### Example 5

The first terminal apparatus determines W sidelink information groups corresponding to the M pieces of sidelink information based on the transmit powers for the M pieces of sidelink information. Each sidelink information group includes at least one of the M pieces of sidelink information, and a sum of transmit powers for sidelink information in each sidelink information group is less than or equal to the maximum transmit power for the sidelink information supported by the first terminal apparatus. W is an integer greater than or equal to 1. Further, the first terminal apparatus determines a third sidelink information group with a largest quantity from the W sidelink information groups based on a quantity of pieces of sidelink information in each sidelink information group. The third sidelink information group includes the N pieces of sidelink information. For a specific implementation, refer to the descriptions in Example 2. Details are not described again.

### Example 6

The first terminal apparatus determines W sidelink information groups corresponding to the M pieces of sidelink information based on the transmit powers for the M pieces of sidelink information; and further determines a fourth sidelink information group with a largest sum of transmit powers from the W sidelink information groups based on the sum of the transmit powers for the sidelink information in each sidelink information group. The fourth sidelink information group includes the N pieces of sidelink information. For a specific implementation, refer to the descriptions in Example 3. Details are not described again.

Some implementations of determining the N pieces of sidelink information based on different parameters are respectively described in Example 4 to Example 6. In another possible example, the N pieces of sidelink information may be determined based on any one or more of or a combination of some principles in a plurality of items in ④ to ⑥. For a specific determining principle, refer to Example 4 to Example 6.

It may be understood that a difference between Implementation 1 and Implementation 2 lies in that in Implementation 1, a maximum transmit power for sidelink information supported by the first terminal apparatus on each carrier (that is, a power limit on each carrier) and the maximum transmit power for the sidelink information supported by the first terminal apparatus are considered, while in Implementation 2, the maximum transmit power for the sidelink information supported by the first terminal apparatus is considered, but the power limit on each carrier is not considered (for example, in Implementation 2, it is considered, by default, that there is no carrier-level power limit on each carrier, or it is considered, by default, that the maximum transmit power for the sidelink information supported by the first terminal apparatus on each carrier is equal to the maximum transmit power for the sidelink information supported by the first terminal apparatus. This is not specifically limited in this application). For content other than the difference, mutual reference may be made between the two implementations.

**S503**: The first terminal apparatus sends the N pieces of sidelink information in the first time unit based on the transmit powers for the N pieces of sidelink information.

Herein, the first terminal apparatus may send the N pieces of sidelink information in the first time unit based on the transmit powers for the N pieces of sidelink information that are determined in S501.

Optionally, the first terminal apparatus may further send some or all of remaining (M-N) pieces of sidelink information in the first time unit. The following describes two possible examples with reference to Example 7 and Example 8.

### Example 7

The first terminal apparatus may determine Mj3 pieces of sidelink information from (Mj1-Mj2) pieces of sidelink information other than the Mj2 pieces of sidelink information among the Mj1 pieces of sidelink information. Mj3 is an integer greater than or equal to 1. Further, the first terminal apparatus sends the Mj3 pieces of sidelink information based on a remaining transmit power of the first terminal apparatus on the j^{th} carrier. The remaining transmit power of the first terminal apparatus on the j^{th} carrier is equal to a difference between the maximum transmit power for the sidelink information supported by the first terminal apparatus on the j^{th} carrier and the sum of the transmit powers for the Mj2 pieces of sidelink information.

For example, Mj3=Mj1-Mj2. In this case, the first terminal apparatus may directly and evenly allocate the remaining transmit power of the first terminal apparatus on the j^{th} carrier to the remaining (Mj1-Mj2) pieces of sidelink information, to perform best-effort transmission. Alternatively, the first terminal apparatus may determine the Mj3 (for example, Mj3=1) pieces of sidelink information with a highest priority from the remaining (Mj1-Mj2) pieces of sidelink information based on priorities of the (Mj1-Mj2) pieces of sidelink information, and allocate the remaining transmit power of the first terminal apparatus on the j^{th} carrier to the sidelink information, to perform best-effort transmission.

### Example 8

If the sum of the transmit powers for the N pieces of sidelink information is less than the maximum transmit power for the sidelink information supported by the first terminal apparatus, that is, a remaining transmit power of the first terminal apparatus (Remaining transmit power of the first terminal apparatus=Maximum transmit power for the sidelink information supported by the first terminal apparatus-Sum of the transmit powers for the N pieces of sidelink information) is greater than 0, the first terminal apparatus may further determine K pieces of sidelink information from remaining (M-N) pieces of sidelink information; and further send the K pieces of sidelink information based on the remaining transmit power of the first terminal apparatus.

For example, K=M-N. In this case, the first terminal apparatus may directly and evenly allocate the remaining transmit power of the first terminal apparatus to the remaining (M-N) pieces of sidelink information, to perform best-effort transmission. Alternatively, the first terminal apparatus may determine the K (for example, K=1) pieces of sidelink information with a highest priority based on priorities of the remaining (M-N) pieces of sidelink information, and allocate the remaining transmit power of the first terminal apparatus to the sidelink information, to perform best-effort transmission.

For example, if the implementation used in S502 is Implementation 1, Example 7 may be used in S503; or if the implementation used in S502 is Implementation 2, Example 8 may be used in S503.

According to the method, the first terminal apparatus may perform sidelink information transmission with power control for a plurality of pieces of sidelink information in a same time unit based on a capability limitation of the first terminal apparatus (for example, the maximum transmit power for the sidelink information supported by the first terminal apparatus), so that a power for sending the sidelink information meets the capability limitation of the first terminal apparatus. This helps improve sidelink communication efficiency.

For the foregoing embodiments, it may be understood that:
(1) The foregoing focuses on describing a difference between different implementations or different examples. For content other than the difference, mutual reference may be made between the different implementations or the different examples. In addition, the different implementations or the different examples may be partially implemented, may be combined for implementation, may be partially combined for implementation, or the like. Details are not listed one by one in embodiments of this application.
(2) The step numbers in each flowchart described in the foregoing embodiments are merely a procedure execution example, and do not constitute a limitation on a step execution sequence. In embodiments of this application, there may be no strict execution sequence between steps having no time sequence dependence relationship with each other. In addition, not all the steps shown in each flowchart are steps that need to be performed. Some steps may be added or deleted based on each flowchart and an actual requirement, or only some steps included in the flowchart may be performed.

The solutions provided in embodiments of this application are mainly described above from the perspective of the terminal apparatus. It may be understood that to implement the foregoing functions, the terminal apparatus may include corresponding hardware structures and/or software modules for performing the functions. It should be readily appreciated by a person skilled in the art that the example units and algorithm steps described with reference to embodiments disclosed in this specification can be implemented in embodiments of this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal apparatus may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

When the integrated unit is used, FIG. 6 is a possible example block diagram of an apparatus according to an embodiment of this application. As shown in FIG. 6, the apparatus 600 may include a processing unit 602 and a communication unit 603. The processing unit 602 is configured to control and manage actions of the apparatus 600. The communication unit 603 is configured to support the apparatus 600 in communicating with another device. Optionally, the communication unit 603 is also referred to as a transceiver unit, and may include a receiving unit and/or a sending unit, which are respectively configured to perform a receiving operation and a sending operation. The apparatus 600 may further include a storage unit 601, configured to store program code and/or data of the apparatus 600.

The apparatus 600 may be the terminal apparatus in the foregoing embodiments. The processing unit 602 may support the apparatus 600 in performing the actions of the terminal apparatus in the foregoing method examples. Alternatively, the processing unit 602 mainly performs an internal action of the terminal apparatus in the method examples, and the communication unit 603 may support communication between the apparatus 600 and another device.

In an embodiment, the processing unit 602 is configured to determine transmit powers for M pieces of sidelink information to be sent in a first time unit, where types to which the M pieces of sidelink information belong include at least two of a sidelink synchronization signal block, sidelink data, and sidelink feedback data, the M pieces of sidelink information are located on P carriers, and M and P are integers greater than 1; when a sum of the transmit powers for the M pieces of sidelink information is greater than a maximum transmit power for sidelink information supported by the terminal apparatus, determines N pieces of sidelink information from the M pieces of sidelink information, where a sum of transmit powers for the N pieces of sidelink information is less than or equal to the maximum transmit power for the sidelink information supported by the terminal apparatus, N is an integer greater than or equal to 1, and M is greater than N; and the communication unit 603 is configured to send the N pieces of sidelink information in the first time unit based on the transmit powers for the N pieces of sidelink information.

In a possible design, the processing unit 602 is specifically configured to: for a j^{th} carrier among the P carriers, determine Mj2 pieces of sidelink information from Mj1 pieces of sidelink information on the j^{th} carrier, where a sum of transmit powers for the Mj2 pieces of sidelink information is less than or equal to a maximum transmit power for sidelink information supported by the terminal apparatus on the j^{th} carrier, a sum of maximum transmit powers for sidelink information supported by the terminal apparatus on each of the P carriers is less than or equal to the maximum transmit power for the sidelink information supported by the terminal apparatus, j=1, 2, ..., P, Mj1 and Mj2 are integers greater than or equal to 1, and Mj1 is greater than or equal to Mj2; and the N pieces of sidelink information include ${\sum }_{j = 1}^{P} Mj 2$ pieces of sidelink information.

In a possible design, the processing unit 602 is specifically configured to determine the Mj2 pieces of sidelink information with a higher priority from the Mj1 pieces of sidelink information based on priorities of the Mj1 pieces of sidelink information.

In a possible design, the Mj1 pieces of sidelink information include first sidelink information, and a priority of the first sidelink information is determined based on a first priority and/or a second priority of the first sidelink information. The first priority is a priority of a type to which the first sidelink information belongs. The second priority is a priority of the first sidelink information among a plurality of pieces of sidelink information belonging to the type.

In a possible design, a priority of the sidelink synchronization signal block is higher than a priority of the sidelink feedback data, and the priority of the sidelink feedback data is higher than a priority of the sidelink data.

In a possible design, the processing unit 602 is specifically configured to: determine Wj sidelink information groups corresponding to the Mj1 pieces of sidelink information based on transmit powers for the Mj1 pieces of sidelink information, where each sidelink information group includes at least one of the Mj1 pieces of sidelink information, a sum of transmit powers for sidelink information in each sidelink information group is less than or equal to the maximum transmit power for the sidelink information supported by the terminal apparatus on the j^{th} carrier, and Wj is an integer greater than or equal to 1; and determine a first sidelink information group with a largest quantity from the Wj sidelink information groups based on a quantity of pieces of sidelink information in each sidelink information group, where the first sidelink information group includes the Mj2 pieces of sidelink information. This helps send more pieces of sidelink information.

In a possible design, the processing unit 602 is specifically configured to: determine Wj sidelink information groups corresponding to the Mj1 pieces of sidelink information based on transmit powers for the Mj1 pieces of sidelink information, where each sidelink information group includes at least one of the Mj1 pieces of sidelink information, a sum of transmit powers for sidelink information in each sidelink information group is less than or equal to the maximum transmit power for the sidelink information supported by the terminal apparatus on the j^{th} carrier, and Wj is an integer greater than or equal to 1; and determine a second sidelink information group with a largest sum of transmit powers from the Wj sidelink information groups based on the sum of the transmit powers for the sidelink information in each sidelink information group, where the second sidelink information group includes the Mj2 pieces of sidelink information.

In a possible design, the processing unit 602 is further configured to determine Mj3 pieces of sidelink information from (Mj1-Mj2) pieces of sidelink information other than the Mj2 pieces of sidelink information among the Mj1 pieces of sidelink information, where Mj3 is an integer greater than or equal to 1; and the communication unit 603 is further configured to send the Mj3 pieces of sidelink information based on a remaining transmit power of the terminal apparatus on the j^{th} carrier, where the remaining transmit power is equal to a difference between the maximum transmit power for the sidelink information supported by the terminal apparatus on the j^{th} carrier and the sum of the transmit powers for the Mj2 pieces of sidelink information.

In a possible design, the processing unit 602 is specifically configured to determine the N pieces of sidelink information with a higher priority from the M pieces of sidelink information based on priorities of the M pieces of sidelink information.

In a possible design, the M pieces of sidelink information include first sidelink information, and a priority of the first sidelink information is determined based on a first priority and/or a second priority of the first sidelink information. The first priority is a priority of a type to which the first sidelink information belongs. The second priority is a priority of the first sidelink information within the type.

In a possible design, a priority of the sidelink synchronization signal block is higher than a priority of the sidelink feedback data, and the priority of the sidelink feedback data is higher than a priority of the sidelink data.

In a possible design, the processing unit 602 is specifically configured to: determine W sidelink information groups corresponding to the M pieces of sidelink information based on the transmit powers for the M pieces of sidelink information, where each sidelink information group includes at least one of the M pieces of sidelink information, a sum of transmit powers for sidelink information in each sidelink information group is less than or equal to the maximum transmit power for the sidelink information supported by the terminal apparatus, and W is an integer greater than or equal to 1; and determine a third sidelink information group with a largest quantity from the W sidelink information groups based on a quantity of pieces of sidelink information in each sidelink information group, where the third sidelink information group includes the N pieces of sidelink information.

In a possible design, the processing unit 602 is specifically configured to: determine W sidelink information groups corresponding to the M pieces of sidelink information based on the transmit powers for the M pieces of sidelink information, where each sidelink information group includes at least one of the M pieces of sidelink information, a sum of transmit powers for sidelink information in each sidelink information group is less than or equal to the maximum transmit power for the sidelink information supported by the terminal apparatus, and W is an integer greater than or equal to 1; and determine a fourth sidelink information group with a largest sum of transmit powers from the W sidelink information groups based on the sum of the transmit powers for the sidelink information in each sidelink information group, where the fourth sidelink information group includes the N pieces of sidelink information.

In a possible design, the processing unit 602 is further configured to determine K pieces of sidelink information from (M-N) pieces of sidelink information other than the N pieces of sidelink information among the M pieces of sidelink information, where K is an integer greater than or equal to 1; and the communication unit 603 is further configured to send the K pieces of sidelink information based on a remaining transmit power of the terminal apparatus, where the remaining transmit power is equal to a difference between the maximum transmit power for the sidelink information supported by the terminal apparatus and the sum of the transmit powers for the N pieces of sidelink information.

It should be understood that division into the units in the apparatus is merely logical function division. In actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, the operations in the foregoing methods or the foregoing units may be implemented by using an integrated logic circuit of hardware in a processor element, or may be implemented in a form of software invoked by a processing element.

In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these forms of integrated circuits. For another example, when the unit in the apparatus may be implemented in a form of scheduling a program by a processing element, the processing element may be a processor, for example, a general-purpose central processing unit (central processing unit, CPU) or another processor that can invoke the program. For another example, the units may be integrated and implemented in a form of a system-on-a-chip (system-on-a-chip, SoC).

The foregoing unit used for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit used for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

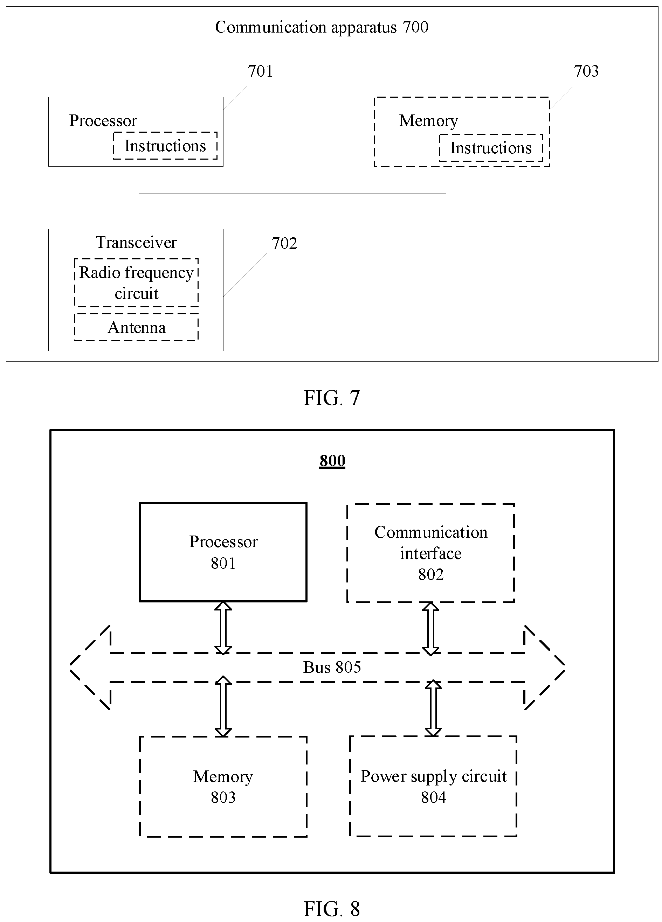

In another possible product form, the terminal apparatus in embodiments of this application may be implemented by using a general bus architecture. For ease of description, FIG. 7 is a diagram of a structure of a communication apparatus 700 according to an embodiment of this application. The communication apparatus 700 includes a processor 701 and a transceiver 702. The communication apparatus 700 may be a first terminal apparatus, or a chip or a chip system in a first terminal apparatus. FIG. 7 shows only main parts of the communication apparatus 700. In addition to the processor 701 and the transceiver 702, the communication apparatus 700 may further include a memory 703 and an input/output apparatus (not shown in the figure).

Optionally, the processor 701 is mainly configured to: process a communication protocol and communication data, control the entire communication apparatus, execute a software program, and process data of the software program. The memory 703 is mainly configured to store the software program and data. The transceiver 702 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data entered by a user, and output data to the user.

Optionally, the processor 701, the transceiver 702, and the memory 703 may be connected through a communication bus.

After the communication apparatus is powered on, the processor 701 may read the software program in the memory 703, explain and execute instructions of the software program, and process data of the software program. When data needs to be wirelessly sent, the processor 701 performs baseband processing on the to-be-sent data, and then outputs a baseband signal to the radio frequency circuit, and the radio frequency circuit performs radio frequency processing on the baseband signal, and then sends a radio frequency signal to outside in a form of an electromagnetic wave through the antenna. When data is to be sent to the communication apparatus, the radio frequency circuit receives a radio frequency signal through the antenna, converts the radio frequency signal into a baseband signal, and outputs the baseband signal to the processor 701. The processor 701 converts the baseband signal into data, and processes the data.

In another implementation, the radio frequency circuit and the antenna may be disposed independently of the processor that performs baseband processing. For example, in a distributed scenario, the radio frequency circuit and the antenna may be disposed remotely and independently of the communication apparatus.

In some embodiments, in terms of hardware implementation, a person skilled in the art may figure out that the communication apparatus 600 may be in a form of the communication apparatus 700 shown in FIG. 7.

In an example, a function/implementation process of the processing unit 602 in FIG. 6 may be implemented by the processor 701 in the communication apparatus 700 shown in FIG. 7 by invoking the computer-executable instructions stored in the memory 703, and a function/implementation process of the communication unit 603 in FIG. 6 may be implemented by the transceiver 702 in the communication apparatus 700 shown in FIG. 7.

In still another possible product form, the terminal apparatus in this application may use a composition structure shown in FIG. 8, or include parts shown in FIG. 8. FIG. 8 is a diagram of composition of a communication apparatus 800 according to this application.

As shown in FIG. 8, the communication apparatus 800 includes at least one processor 801. Optionally, the communication apparatus further includes a communication interface 802.

When related program instructions are executed in the at least one processor 801, the apparatus 800 may be enabled to implement the method provided in any one of the foregoing embodiments and any possible design of the method. Alternatively, the processor 801 is configured to implement, through a logic circuit or by executing code instructions, the method provided in any one of the foregoing embodiments and any possible design of the method.

The communication interface 802 may be configured to: receive program instructions, and transmit the program instructions to the processor. Alternatively, the communication interface 802 may be configured to perform communication interaction between the communication apparatus 800 and another communication device, for example, exchange control signaling and/or service data. For example, the communication interface 802 may be configured to: receive a signal from an apparatus other than the communication apparatus 800, and transmit the signal to the processor 801, or send a signal from the processor 801 to a communication apparatus other than the communication apparatus 800.

Optionally, the communication interface 802 may be a code and/or data read/write interface circuit, or the communication interface 802 may be a signal transmission interface circuit between a communication processor and a transceiver, or may be a pin of a chip.

Optionally, the communication apparatus 800 may further include at least one memory 803, and the memory 803 may be configured to store the related program instructions and/or data that are/is required. It should be noted that the memory 803 may exist independently of the processor 801, or may be integrated with the processor 801. The memory 803 may be located inside the communication apparatus 800, or may be located outside the communication apparatus 800. This is not limited.

Optionally, the communication apparatus 800 may further include a power supply circuit 804, and the power supply circuit 804 may be configured to supply power to the processor 801. The power supply circuit 804 may be located in a same chip as the processor 801, or may be located in a chip other than a chip in which the processor 801 is located.

Optionally, the communication apparatus 800 may further include a bus 805, and parts of the communication apparatus 800 may be interconnected through the bus 805.

In some embodiments, in terms of hardware implementation, a person skilled in the art may figure out that the communication apparatus 600 shown in FIG. 6 may be in a form of the communication apparatus 800 shown in FIG. 8.

In an example, a function/implementation process of the processing unit 602 in FIG. 6 may be implemented by the processor 801 in the communication apparatus 800 shown in FIG. 8 by invoking the computer-executable instructions stored in the memory 803, and a function/implementation process of the communication unit 603 in FIG. 6 may be implemented by the communication interface 802 in the communication apparatus 800 shown in FIG. 8.

It should be noted that the structure shown in FIG. 8 does not constitute a specific limitation on the terminal apparatus. For example, in some other embodiments of this application, the terminal apparatus may include more or fewer parts than those shown in the figure, some parts may be combined, some parts may be split, or different part arrangements may be used. The parts shown in the figure may be implemented by hardware, software, or a combination of software and hardware.

Optionally, the processor in this application may be a CPU, or the processor may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

The terms "system" and "network" in embodiments of this application may be interchangeably used. "At least one" means one or more, and "a plurality of" means two or more. "And/Or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects. "At least one of the following" or a similar expression thereof indicates any combination of these items, including a single item or any combination of a plurality of items. For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

Alternatively, these computer program instructions may be stored in a computer-readable memory that can direct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions may be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. A communication method, wherein the method is applied to a terminal apparatus, and the method comprises:
determining transmit powers for M pieces of sidelink information to be sent in a first time unit, wherein types to which the M pieces of sidelink information belong comprise at least two of: a sidelink synchronization signal block, sidelink data, and sidelink feedback data, the M pieces of sidelink information are located on P carriers, and M and P are integers greater than 1;
when a sum of the transmit powers for the M pieces of sidelink information is greater than a maximum transmit power for sidelink information supported by the terminal apparatus, determining N pieces of sidelink information from the M pieces of sidelink information, wherein a sum of transmit powers for the N pieces of sidelink information is less than or equal to the maximum transmit power for the sidelink information supported by the terminal apparatus, N is an integer greater than or equal to 1, and M is greater than N; and
sending the N pieces of sidelink information in the first time unit based on the transmit powers for the N pieces of sidelink information.

2. The method according to claim 1, wherein determining the N pieces of sidelink information from the M pieces of sidelink information comprises:
for a j^{th} carrier among the P carriers, determining Mj2 pieces of sidelink information from Mj1 pieces of sidelink information on the j^{th} carrier, wherein a sum of transmit powers for the Mj2 pieces of sidelink information is less than or equal to a maximum transmit power for sidelink information supported by the terminal apparatus on the j^{th} carrier, a sum of maximum transmit powers for sidelink information supported by the terminal apparatus on each of the P carriers is less than or equal to the maximum transmit power for the sidelink information supported by the terminal apparatus, j=1, 2, ..., P, Mj1 and Mj2 are integers greater than or equal to 1, and Mj1 is greater than or equal to Mj2; and
the N pieces of sidelink information comprise ${\sum }_{j = 1}^{P} Mj 2$ pieces of sidelink information.

3. The method according to claim 2, wherein determining the Mj2 pieces of sidelink information from the Mj1 pieces of sidelink information on the j^{th} carrier comprises:
determining the Mj2 pieces of sidelink information with a higher priority from the Mj1 pieces of sidelink information based on priorities of the Mj1 pieces of sidelink information.

4. The method according to claim 3, wherein the Mj1 pieces of sidelink information comprise first sidelink information, and a priority of the first sidelink information is determined based on a first priority and/or a second priority of the first sidelink information;
the first priority is a priority of a type to which the first sidelink information belongs; and
the second priority is a priority of the first sidelink information among a plurality of pieces of sidelink information belonging to the type.

5. The method according to claim 4, wherein a priority of the sidelink synchronization signal block is higher than a priority of the sidelink feedback data, and the priority of the sidelink feedback data is higher than a priority of the sidelink data.

6. The method according to claim 2, wherein determining the Mj2 pieces of sidelink information from the Mj1 pieces of sidelink information on the j^{th} carrier comprises:
determining Wj sidelink information groups corresponding to the Mj1 pieces of sidelink information based on transmit powers for the Mj1 pieces of sidelink information, wherein each sidelink information group comprises at least one of the Mj1 pieces of sidelink information, a sum of transmit powers for sidelink information in each sidelink information group is less than or equal to the maximum transmit power for the sidelink information supported by the terminal apparatus on the j^{th} carrier, and Wj is an integer greater than or equal to 1; and
determining a first sidelink information group with a largest quantity from the Wj sidelink information groups based on a quantity of pieces of sidelink information in each sidelink information group, wherein the first sidelink information group comprises the Mj2 pieces of sidelink information.

7. The method according to claim 2, wherein determining the Mj2 pieces of sidelink information from the Mj1 pieces of sidelink information on the j^{th} carrier comprises:
determining Wj sidelink information groups corresponding to the Mj1 pieces of sidelink information based on transmit powers for the Mj1 pieces of sidelink information, wherein each sidelink information group comprises at least one of the Mj1 pieces of sidelink information, a sum of transmit powers for sidelink information in each sidelink information group is less than or equal to the maximum transmit power for the sidelink information supported by the terminal apparatus on the j^{th} carrier, and Wj is an integer greater than or equal to 1; and
determining a second sidelink information group with a largest sum of transmit powers from the Wj sidelink information groups based on the sum of the transmit powers for the sidelink information in each sidelink information group, wherein the second sidelink information group comprises the Mj2 pieces of sidelink information.

8. The method according to any one of claims 2 to 7, wherein the method further comprises:
determining Mj3 pieces of sidelink information from (Mj1-Mj2) pieces of sidelink information other than the Mj2 pieces of sidelink information among the Mj1 pieces of sidelink information, wherein Mj3 is an integer greater than or equal to 1; and
sending the Mj3 pieces of sidelink information based on a remaining transmit power of the terminal apparatus on the j^{th} carrier, wherein the remaining transmit power is equal to a difference between the maximum transmit power for the sidelink information supported by the terminal apparatus on the j^{th} carrier and the sum of the transmit powers for the Mj2 pieces of sidelink information.

9. The method according to claim 1, wherein determining the N pieces of sidelink information from the M pieces of sidelink information comprises:
determining the N pieces of sidelink information with a higher priority from the M pieces of sidelink information based on priorities of the M pieces of sidelink information.

10. The method according to claim 9, wherein the M pieces of sidelink information comprise first sidelink information, and a priority of the first sidelink information is determined based on a first priority and/or a second priority of the first sidelink information;
the first priority is a priority of a type to which the first sidelink information belongs; and
the second priority is a priority of the first sidelink information within the type.

11. The method according to claim 10, wherein a priority of the sidelink synchronization signal block is higher than a priority of the sidelink feedback data, and the priority of the sidelink feedback data is higher than a priority of the sidelink data.

12. The method according to claim 1, wherein determining the N pieces of sidelink information from the M pieces of sidelink information comprises:
determining W sidelink information groups corresponding to the M pieces of sidelink information based on the transmit powers for the M pieces of sidelink information, wherein each sidelink information group comprises at least one of the M pieces of sidelink information, a sum of transmit powers for sidelink information in each sidelink information group is less than or equal to the maximum transmit power for the sidelink information supported by the terminal apparatus, and W is an integer greater than or equal to 1; and
determining a third sidelink information group with a largest quantity from the W sidelink information groups based on a quantity of pieces of sidelink information in each sidelink information group, wherein the third sidelink information group comprises the N pieces of sidelink information.

13. The method according to claim 1, wherein determining the N pieces of sidelink information from the M pieces of sidelink information comprises:
determining W sidelink information groups corresponding to the M pieces of sidelink information based on the transmit powers for the M pieces of sidelink information, wherein each sidelink information group comprises at least one of the M pieces of sidelink information, a sum of transmit powers for sidelink information in each sidelink information group is less than or equal to the maximum transmit power for the sidelink information supported by the terminal apparatus, and W is an integer greater than or equal to 1; and
determining a fourth sidelink information group with a largest sum of transmit powers from the W sidelink information groups based on the sum of the transmit powers for the sidelink information in each sidelink information group, wherein the fourth sidelink information group comprises the N pieces of sidelink information.

14. The method according to any one of claims 9 to 13, wherein the method further comprises:
determining K pieces of sidelink information from (M-N) pieces of sidelink information other than the N pieces of sidelink information among the M pieces of sidelink information, wherein K is an integer greater than or equal to 1; and
sending the K pieces of sidelink information based on a remaining transmit power of the terminal apparatus, wherein the remaining transmit power is equal to a difference between the maximum transmit power for the sidelink information supported by the terminal apparatus and the sum of the transmit powers for the N pieces of sidelink information.

15. The method according to any one of claims 1 to 14, wherein the first time unit comprises a slot or at least one symbol in the slot.

16. The method according to any one of claims 1 to 15, wherein the P carriers are located on different frequency bands.

17. A communication apparatus, comprising a unit configured to perform the method according to any one of claims 1 to 16.

18. A communication apparatus, comprising a processor, wherein the processor is coupled to a memory, the memory stores a computer program, and the processor is configured to invoke the computer program in the memory, to perform the method according to any one of claims 1 to 16.

19. A computer-readable storage medium, wherein the storage medium stores a computer program or instructions, and when the computer program or the instructions are executed by a computer, the method according to any one of claims 1 to 16 is performed.

20. A computer program product, wherein when a computer reads and executes the computer program product, the method according to any one of claims 1 to 16 is performed.
